# EUROPÄISCHE PATENTSCHRIFT

(11) **EP 2 354 677 B1**
(45) Veröffentlichungstag und Bekanntmachung des Hinweises auf die Patenterteilung: **19.08.2015**
(21) Anmeldenummer: 10152550.9
(22) Anmeldetag: 03.02.2010
(51) Int. Cl.: F24D 10/00, F24D 19/10

(54) **Nutzung von Wärme aus den Fernwärmerücklauf**
Use of heat from the district heating return
Utilisation de la chaleur du reflux de chauffage urbain

(43) Veröffentlichungstag der Anmeldung: 10.08.2011
(73) Patentinhaber: GEWOFAG Gebäude Service GmbH, 81669 München (DE)
(72) Erfinder: Ebster, Wilfried, 82024, Taufkirchen (DE)
(74) Vertreter: Huebner, Stefan Rolf

(56) Entgegenhaltungen:
- EP-A1- 1 455 140
- EP-A2- 2 182 296
- EP-A2- 2 187 135
- DE-A1- 4 443 204
- DE-A1- 19 616 885

## Beschreibung

### Gebiet der Erfindung

Die vorliegende Erfindung betrifft eine Fernwärmeverbraucheranlage zur Wärmeversorgung von zumindest einem Wärmeverbraucher aus einem Fernwärmenetz, die einen ersten Wärmetauscher mit einem Primärvorlauf aufweist.

### Hintergrund der Erfindung

Die Offenlegungsschrift DE 44 43 204 A1 offenbart ein Wärmetransportsystem, bei dem ein Verdampfer einer Absorptionswärmepumpe eine zusätzliche Wärmemenge für Verbraucher zur Verfügung stellt, die dem Verdampfer beispielsweise unmittelbar aus einem Fernwärmerücklauf mittels eines Wärmeträgermittels zugeführt wird, welches nach dem Durchlaufen des Verdampfers wieder in den Rücklauf geführt wird.

Aus der Patentanmeldung EP 1 455 140 A1 ist eine durch Fernwärme gespeiste Hausanschlussstation bekannt. Sie umfasst eine Warmwasserbereitungsanlage, die über Rückläufe an den Rücklauf der Hausanschlussstation angeschlossen ist und diesem Rücklauf der Hausanschlussstation Wärme entnimmt.

In DE 196 16 885 A1 werden ein Verfahren und eine Vorrichtung zur nachträglichen Herstellung und Revision von der Hausanschlussseite für eine Stichleitung mit einem Vor- und Rücklaufkanal zwischen einem Einrohr-Femheizkanal und einem Wärmeverbraucher offenbart.

Beispielsweise ist aus der deutschen Patentschrift DE 19859364 C2 eine Wärmeversorgungsanlage bekannt, die an ein Wärmeversorgungsnetz angeschlossen ist.

Die Wärmeversorgungsanlage leitet von einer Fernleitung über eine Vorlaufleitung Wärmeträger ab. Diese dienen jeweils der Versorgung eines Heizkreises, in dem jeweils einer oder mehrere Wärmeverbraucher angeordnet sein können. Die Wärmeverbraucher sind über eine Rücklaufleitung mit einem Rücklauf des Wärmeversorgungsnetzes verbunden.

Weiter ist aus der europäischen Offenlegungsschrift EP 1371910 A2 eine Hausanschlussstation für Fernwärme bestehend aus Speichern, Wärmeübertragern, Pumpen, Absperrarmaturen, Temperaturmeßfühlern und einem Regler sowie Anschlüssen für Fernwärmevor- und Rücklauf bekannt. Diese Hausanschlussstation weist eine Warmwasserbereitungsantage mit einer direkten Verbindung zum Fernwärmevorlauf auf.

Weiter ist aus der deutschen Offenlegungsschrift DE 102005044845 A1 eine Trinkwassererwärmungsanlage bekannt, die als zentrales Bauteil einen Trinkwassererwärmer umfasst. Zur Wärmeversorgung dient eine Wärmequelle, die beispielsweise ein Anschluss an eine Femwärmeversorgung ist.

### Der Erfindung zugrundeliegende Aufgabe

Der Erfindung liegt die Aufgabe zugrunde, eine gegenüber den bekannten Fernwärmeverbraucheranlagen verbesserte Fernwärmeverbraucheranlage bereitzustellen. Insbesondere soll eine Fernwärmeverbraucheranlage bereitgestellt werden, durch die Energie gespart werden kann.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch eine Fernwärmeverbraucheranlage mit den Merkmalen des Anspruchs 1, ein Fernwärmenetz mit den Merkmalen des Anspruchs 11 und ein Fernwärmesystem mit den Merkmalen des Anspruchs 14.

Durch die über einen Anschluss an einen Fernwärmerücklauf des Fernwärmenetzes anschließbare Fernwärmeverbraucheranlage ist mit der Erfindung erreichbar, dass dem Fernwärmerücklauf, der z.B. eine Temperatur von bis zu 70°C aufweisen kann, durch die Fernwärmeverbraucheranlage Wärme entnommen wird. Hierdurch können Wärmeverbraucher der Fernwärmeverbraucheranlage mit Wärme versorgt werden. Vorteilhafterweise kann durch den Anschluss des Fernwärmerücklaufs des Fernwärmenetzes, eine Fernwärmeverbraucheranlage mit Wärme aus dem Fernwärmerücklauf versorgt werden.

Unter einem Fernwärmenetz ist ein System zu verstehen, über das in einem Fernheizwerk erzeugte Wärme oder thermische Energie von dem Fernheizwerk zu Fernwärmeverbraucheranlagen transportiert werden kann, um die Fernwärmeverbraucheranlagen mit Wärme zu versorgen. Ein Wärmeversorger kann also die in dem Fernheizwerk erzeugte Energie über das Fernwärmenetz transportieren, um diese der jeweiligen Fernwärmeverbraucheranlage, die z.B. in einem Gebäude installiert ist, zur Verfügung zu stellen. Über ein Fernwärmenetz kann die in einem Fernheizwerk erzeugte Wärme oder thermische Energie von dem Fernheizwerk zu einer Vielzahl von Fernwärmeverbraucheranlagen transportiert werden, um den zumindest einen Wärmeverbraucher einer jeden Fernwärmeverbraucheranlage mit Wärme versorgen zu können. Hierzu kann das Fernwärmenetz z.B. Verzweigungen aufweisen, die z.B. strahlenförmig, ringförmig oder maschenförmig ausgeführt sein können. Auch können mehrere Fernheizwerke miteinander verbunden sein, damit Versorgungsprobleme beim Ausfall eines Fernheizwerks vermieden werden könnne. Das Fernwärmenetz kann zum Bezug von Wärme aus dem Fernheizwerk z.B. über zumindest einen Wärmetauscher mit dem Fernheizwerk verbunden sein. Das Fernwärmenetz kann z.B. an der Stelle des Fernheizwerks beginnen, an der das von dem Fernheizwerk erwärmte Medium zur Verfügung gestellt wird. Erfindungsgemäß kann das Fernwärmenetz aber auch das Fernheizwerk umfassen. Das Fernwärmenetz besteht aus einem Fernwärmevorlauf und einem Fernwärmerücklauf. Der Fernwärmevorlauf ist der Teil des Fernwärmenetzes, über den eine Fernwärmeverbraucheranlage ein von dem Fernheizwerk erwärmtes Medium beziehen kann. In der Fernwärmeverbraucheranlage, z.B. in einer Hausanlage, kann diesem Medium Wärme entnommen werden, um Wärmeverbraucher der Fernwärmeverbraucheranlage mit Wärme versorgen zu können. Anschließend kann das Medium in den Fernwärmerücklauf geführt werden, um dieses zu dem Fernheizwerk zurücktransportieren zu können. In dem Fernwärmerücklauf kann also das von mehreren Fernwärmeverbraucheranlagen abgekühlte Medium wieder zurück zu dem Fernheizwerk transportiert werden. Das Fernheizwerk kann z.B. ein Heizwerk, ein Heizkraftwerk mit Wärme-Kraft-Kopplung, eine Geothermieanlage, eine Biogasanlage oder eine Biohackschnitzelanlage sein. Das in dem Fernwärmenetz geführte Medium kann z.B. Wärme und/oder Dampf sein.

Es ist ein erreichbarer Vorteil der an den Fernwärmerücklauf anschließbaren Fernwärmeverbraucheranlage, dass Restwärme aus dem Fernwärmerücklauf genutzt werden kann, die eigentlich nicht mehr zur Nutzung vorgesehen ist. Denn in dem Fernwärmerücklauf wird das Medium, dem bereits durch Fernwärmeverbraucheranlagen Wärme entnommen wurde, zurück zu dem Fernheizwerk transportiert. Das in dem Fernwärmerücklauf geführte Medium kann z.B. eine Temperatur von bis zu 70°C erreichen, was eine erhebliche Energiequelle darstellen kann. Durch die Nutzung der Restwärme aus dem Fernwärmerücklauf kann vorteilhafterweise vermieden werden, dass das in dem Fernwärmerücklauf transportierte Medium vor Zuführung zu dem Fernheizwerk abgekühlt werden muss. Weiter kann durch die Erfindung ermöglicht werden, die in Form von Restwärme zur Verfügung stehende Energie effektiv zu nutzen, um somit Energie zu sparen. Dies kann zu einem reduzierten Energieverbrauch der Fernwärmeverbraucheranlage führen. Es sind Ausführungen der Erfindung denkbar, durch die erhebliche Energieeinsparungen ermöglicht werden können, so dass der Anschlusswert der Fernwärmeverbraucheranlage z.B. um ca. 20% reduziert werden kann. Dies kann zu reduzierten Betriebskosten der Fernwärmeverbraucheranlage führen.

Vorteilhafterweise ist durch die über den Anschluss an den Fernwärmerücklauf anschließbare Fernwärmeverbraucheranlage eine Leistungssteigerung der Fernwärmeverbraucheranlage erreichbar, da durch den Bezug von Wärme aus dem Fernwärmerücklauf eine zusätzliche Wärmequelle genutzt werden kann. Durch die Leistungssteigerung kann vorteilhafterweise die Gebäudeheizlast reduziert, oder die Versorgung von Niedrigenergiehäusern mit Fernwärme erleichtert werden. So kann, z.B. bei einem Niedrigenergiehaus, eine Vorerwärmung von Trinkwarmwasser durch Fernwärme ermöglicht werden. Dies ist auch deshalb besonders vorteilhaft, weil bei Niedrigenergiehäusern häufig die zum Aufheizen von Trinkwarmwasser benötigte Wärmeleistung den Fernwärme-Anschlusswert des Hauses, der üblicherweise über die zum Beheizen des Niedrigenergiehauses benötigte Wärmeleistung ermittelt wird, übersteigt. Natürlich ist die Vorerwärmung von Trinkwarmwasser von z.B. ca. 10°C auf z.B. ca. 30°C bis 40°C durch den ersten Wärmetauscher nicht auf Niedrigenergiehäuser beschränkt, sondern für jegliche Fernwärmeversorgnugnsanlagen denkbar.

Die erfindungsgemäß angeschlossene Fernwärmeverbraucheranlage kann sich besonders zur Versorgung von Niedrigenergieverbrauchern mit Wärme eignen. Vorteilhafterweise kann der Energiebedarf von Niedrigenergieverbrauchern vollständig von der aus dem Fernwärmerücklauf gewonnenen Wärme gedeckt werden. Solche Niedrigenergieverbraucher können z.B. Fußboden-, Wand-, oder Deckenheizungen sein, die z.B. zum Beheizen von Lagerhallen, Schwimmbädern oder Gärtnereien genutzt werden.

Ein weiterer erreichbarer Vorteil der Nutzung von Wärme aus dem Fernwärmerücklauf ist, dass die Temperatur des in dem Fernwärmerücklauf transportierten Mediums, auch als Rücklauftemperatur bezeichnet, verringert werden kann. Es sind Ausführungen der Erfindung denkbar, die sogar eine erhebliche Reduzierung der Rücklauftemperatur ermöglichen können. Vorteilhafterweise kann durch die Reduzierung der Rücklauftemperatur erreicht werden, dass das in dem Fernwärmerücklauf zu dem Fernheizwerk strömende Medium vor Zuführung zu dem Fernheizwerk weniger oder sogar gar nicht gekühlt werden muss. Dies kann zu einer Erhöhung des Wirkungsgrads und/oder einer Erhöhung der Wärmeleistung des Fernwärmenetzes führen. Denn um einen effektiven Betrieb des Fernheizwerks zu ermöglichen, darf eine bestimmte Rücklauftemperatur des zugeführten Mediums nicht überschritten werden. Die aufgrund von hohen Rücklauftemperaturen häufig erforderlichen, aufwendigen Kühlungsmaßnahmen können vorteilhafterweise durch die Erfindung reduziert oder sogar vollständig abgeschafft werden. Das kann zu einem wirtschaftlich günstigen Betreiben des Fernwärmenetzes und des Fernheizwerks führen, wobei der Wirkungsgrad und/oder die Wärmeleistung des Fernwärmenetzes z.B. um 20% - 30% erhöht werden kann. Vorteilhafterweise kann durch die Erhöhung des Wirkungsgrads und/oder der Wärmeleistung Energie gespart werden. Eine Erhöhung des Wirkungsgrads und/oder eine Leistungssteigerung kann sich z.B. bei Geothermieanlagen als besonderer Vorteil erweisen. Durch die Absenkung von in manchen Ausführungsformen sehr hohen Rücklauftemperaturen ist sogar eine enorme Erhöhung des Wirkungsgrads erreichbar.

Natürlich können die durch die Fernwärmeverbraucheranlage erreichbaren Vorteile ebenso auch durch das erfindungsgemäß ausgestaltete Fernwärmenetz und/oder das erfindungsgemäße Fernwärmesystem erreichbar sein.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführung der Erfindung weist die Fernwärmeverbraucheranlage eine Rücklaufübergabestation auf, um dem Fernwärmerücklauf über die Rücklaufübergabestation Wärme zu entnehmen. Besonders vorzugsweise ist die Fernwärmeverbraucheranlage über die Rücklaufübergabestation an den Fernwärmerücklauf anschließbar. Das bedeutet, dass das in dem Fernwärmerücklauf geführte Medium aus dem Fernwärmerücklauf durch die Rücklaufübergabestation fließt, um zur Wärmeversorgung abgekühlt zu werden. Nach der Abkühlung kann das Medium wieder durch die Rücklaufübergabestation in den Fernwärmerücklauf zurückfließen. Die Rücklaufübergabestation ist besonders vorzugsweise vom Typ einer Übergabestation. Natürlich kann eine erfindungsgemäße Rücklaufübergabestation auch Teil des Fernwärmenetzes sein.

Durch eine Übergabestation kann eine Fernwärmeverbraucheranlage an ein Fernwärmenetz angeschlossen werden. Hierbei kann die Übergabestation erfindungsgemäß Teil der Fernwärmeverbraucheranlage und/oder Teil des Fernwärmenetzes sein. Vorteilhafterweise kann Wärme aus dem Fernwärmenetz über die Übergabestation an die Fernwärmeverbraucheranlage geliefert werden. Besonders vorzugsweise fließt hierzu ein Medium aus dem Fernwärmenetz durch die Übergabestation in die Fernwärmeverbraucheranlage, um in der Fernwärmeverbraucheranlage zur Wärmeversorgung abgekühlt werden zu können, und fließt anschließend durch die Übergabestation in das Fernwärmenetz zurück. Durch die Übergabestation kann vorteilhafterweise eine fluidische Verbindung zwischen Fernwärmenetz und Fernwärmeverbraucheranlage hergestellt werden. Besonders vorzugsweise weist die Übergabestation einen Differenzdruckregler auf, um die in dem Fernwärmenetz bestehenden Druckverhältnisse auf die Fernwärmeanlage anpassen zu können. Besonders vorzugsweise weist die Übergabestation ein steuerbares Regelventil auf, um dem Fernwärmenetz nur bei Bedarf Wärme zu entnehmen. Ein solches Regelventil kann z.B. ein motorbetriebenes Regelventil oder eine Strahlpumpe sein. Eine besonders bevorzugte Übergabestation weist einen Wärmemengenzähler auf, um die dem Fernwärmenetz entnommene Wärme zu erfassen. Vorteilhafterweise kann ein Wärmeversorger hierdurch dem Betreiber der Wärmeverbraucheranlage die gelieferte Wärme in Rechnung stellen. Weiter kann eine Übergabestation z.B. Absperrventile, Entlüftungsventile und/oder Manometer aufweisen.

In einer weiteren bevorzugten Ausführung der Erfindung weist die Fernwärmeverbraucheranlage einen ersten Wärmetauscher mit einem Primärvorlauf und einem Primärrücklauf auf, wobei der Primärvorlauf und der Primärrücklauf des ersten Wärmetauschers an den Fernwärmerücklauf anschließbar sind, um dem Fernwärmerücklauf Wärme zu entnehmen. Es ist ein erreichbarer Vorteil des an den Fernwärmerücklauf anschließbaren ersten Wärmetauschers, dass Restwärme aus dem Fernwärmerücklauf genutzt werden kann, die eigentlich nicht mehr zur Nutzung vorgesehen ist. Vorteilhafterweise ist durch den an den Fernwärmerücklauf anschließbaren ersten Wärmetauscher eine Leistungssteigerung der Fernwärmeverbraucheranlage erreichbar, da durch den Bezug von Wärme aus dem Fernwärmerücklauf eine zusätzliche Wärmequelle genutzt werden kann. Der erfindungsgemäß anschließbare erste Wärmetauscher kann sich besonders zur Versorgung von Niedrigenergieverbrauchern mit Wärme eignen. Weiter ist der erfindungsgemäße erste Wärmetauscher einfach für bestehende Fernwärmeverbraucheranlagen nachrüstbar, da bestehende Installationen, z.B. in einem Gebäude nicht verändert werden müssen. Vorteilhafterweise muss für eine Nachrüstung nur die in einem Installationsraum vorhandene Anlage teilweise umgebaut, sowie ein zusätzlicher Anschluss an die Leitung des Fernwärmerücklaufs angebracht werden. Da die Fernwärmeversorgungsleitungen sehr vieler Fernwärmeverbraucheranlagen durch Kellerräume geführt werden, kann ein dritter oder vierter Anschluss für den ersten Wärmetauscher vorteilhafterweise ohne großen Aufwand kostengünstig erstellt werden.

Ein Wärmetauscher, der auch als Wärmeübertrager bezeichnet werden kann, ist eine Vorrichtung zur Übertragung von Wärme von einem Primär- auf ein Sekundärsystem. Der Primärvorlauf ist der Anschluss der Primärseite des Wärmetauschers, über den dem Wärmetauscher ein Medium aus dem Primärsystem zugeführt werden kann, um diesem Medium Wärme zu entnehmen und die entnommene Wärme an das Sekundärsystem zu übertragen. Der Primärvorlauf ist dann an den Fernwärmerücklauf angeschlossen, wenn das in dem Fernwärmerücklauf geführte Medium aus dem Fernwärmerücklauf über den Primärvorlauf in den ersten Wärmetauscher strömen kann.

In einer besonders bevorzugten Ausführung der Erfindung weist der erste Wärmetauscher einen Primärrücklauf auf, der an den Fernwärmerücklauf angeschlossen ist. Der Primärrücklauf ist hierbei der Anschluss der Primärseite des Wärmetauschers, durch den das Medium, das dem Wärmetauscher durch den Primärvorlauf zugeführt wurde, nach Durchströmen des Wärmetauschers und nach Abgabe von Wärme den Wärmetauscher wieder verlassen kann. Hierdurch ist erreichbar, dass das Medium aus dem Fernwärmerücklauf über den Primärvorlauf in den ersten Wärmetauscher fließt, diesen durchströmt und über den Primärrücklauf in den Fernwärmerücklauf zurückfließt. Mit anderen Worten, zur Wärmeübertragung wird der erste Wärmetauscher von dem Medium aus dem Fernwärmerücklauf auf der Primärseite durchflossen, um ein Medium eines an die Sekundärseite angeschlossenen Sekundärsystems zu erwärmen, und so Wärme von dem Fernwärmerücklauf an das Sekundärsystem zu übertragen. Eine besonders bevorzugte Fernwärmeverbraucheranlage ist nur über den ersten Wärmetauscher an das Fernwärmenetz angeschlossen, um Niedrigenergieverbraucher und/oder Niedertemperatursysteme mit Wärme zu versorgen. Solche Niedertemperatursysteme können Niedertemperaturheizungs- und/oder Niedertemperaturlüftungsanlagen sein. Über eine solche Fernwärmeverbraucheranlage kann z.B. eine Lagerhalle oder eine Gärtnerei beheizt werden, ein Niedrigenergiehaus oder eine Fußbodenheizung betrieben werden.

Besonders vorzugsweise ist der Primärvorlauf des ersten Wärmetauschers an den Fernwärmerücklauf des Fernwärmenetzes anschließbar. Besonders vorzugsweise ist der Primärvorlauf des ersten Wärmetauschers über eine Rücklaufübergabestation an den Fernwärmerücklauf anschließbar. Vorteilhafterweise kann hierdurch ein in dem Fernwärmerücklauf geführtes Medium durch die Rücklaufübergabestation zu dem Primärvorlauf des ersten Wärmetauschers fließen. Besonders vorzugsweise ist der Primärrücklauf des ersten Wärmetauschers an den Fernwärmerücklauf des Fernwärmenetzes anschließbar. Besonders vorzugsweise ist der Primärrücklauf des ersten Wärmetauschers über eine Rücklaufübergabestation an den Fernwärmerücklauf anschließbar. Die Primärseite des ersten Wärmetauschers, die den Primärvorlauf und/oder den Primärrücklauf aufweist, ist also besonders vorzugsweise über die Rücklaufübergabestation an den Fernwärmerücklauf anschließbar. Durch den an den Fernwärmerücklauf des Fernwärmenetzes anschließbaren Primärvorlauf und/oder Primärrücklauf des ersten Wärmetauschers ist mit der Erfindung erreichbar, dass dem Fernwärmerücklauf, der z.B. eine Temperatur von bis zu 70°C aufweisen kann, durch den ersten Wärmetauscher Wärme entnommen wird, um diese an einen Wärmeverbraucher zu übertragen.

Besonders vorzugsweise ist der erste Wärmetauscher von Typ eines Wärmetauschers, der eine Primär- und eine Sekundärseite aufweist, wobei an die Primär- und an die Sekundärseite je ein Primär- und ein Sekundärsystem angeschlossen werden können. Hierdurch kann Wärme von dem Primär- an das Sekundärsystem übertragen werden. Hierbei wird der Primärseite der Primärvorlauf sowie der Primärrücklauf, und der Sekundärseite ein Sekundärvorlauf sowie ein Sekundärrücklauf zugerechnet. Besonders vorzugsweise sind die an die Primärseite und Sekundärseite angeschlossene Primär- und Sekundärsystem voneinander getrennt, d.h. es wird zwischen den beiden Systemen bei der Wärmeübertragung kein Medium ausgetauscht. Das in dem Primär- oder Sekundärsystem geführte Medium kann z.B. Wasser und/oder Dampf sein.

In einer weiteren bevorzugten Ausführungsform ist zwischen dem Primärvorlauf des ersten Wärmetauschers und dem Fernwärmerücklauf eine Förderpumpe angeordnet, um das in den Fernwärmerücklauf strömende Medium durch den ersten Wärmetauscher fördern zu können. Vorteilhafterweise kann durch die Förderpumpe selbst bei geringen Druckverhältnissen in dem Fernwärmerücklauf, z.B. aufgrund geringer Pumpleistung des Fernwärmelieferanten das Medium aus dem Fernwärmerücklauf und durch den ersten Wärmetauscher gefördert werden. In einer besonders bevorzugten Ausführung der Erfindung ist die Förderpumpe zwischen dem Primärrücklauf des ersten Wärmetauschers und dem Fernwärmerücklauf angeordnet. Hierdurch kann die Saugwirkung der Förderpumpe verbessert werden, was zu einer Verbesserung der Wärmeübertragung des ersten Wärmetauschers und damit zu einer Leistungssteigerung führen kann. Dies kann sich vor allem bei hohen Drücken und/oder hohen Strömungsgeschwindigkeiten innerhalb des Fernwärmerücklaufs als Vorteil erweisen.

In einer weiteren besonders bevorzugten Ausführung der Erfindung weist der Fernwärmerücklauf eine Drosselklappe auf. Besonders vorzugsweise ist die Drosselklappe dem Anschluss des Primärvorlaufs des ersten Wärmetauschers an den Fernwärmerücklauf in Strömungsrichtung nachgelagert. Besonders vorzugsweise ist die Drosselklappe dem Anschluss des Primärrücklaufs des ersten Wärmetauschers an den Fernwärmerücklauf in Strömungsrichtung vorgelagert. Die Strömungsrichtung des Fernwärmerücklaufs ist die Richtung, in die ein Medium im Fernwärmerücklauf strömt, z.B. in Richtung des Fernheizwerks. Durch die Drosselklappe kann das in dem Fernwärmerücklauf geführte Medium so angestaut werden, dass eine Erhöhung des Drucks und/oder der Strömungsgeschwindigkeit in dem Primärvorlauf des ersten Wärmetauschers erreicht werden kann. Hierdurch kann die Wärme effektiver an die Wärmeverbraucher übertragen werden. Natürlich umfasst die Erfindung Ausführungsformen, in denen die Fernwärmeverbraucheranlage die Drosselklappe und die Förderpumpe sowohl einzeln als auch in Kombination miteinander aufweist.

In einer bevorzugten Ausführung der Erfindung weist die Fernwärmeverbraucheranlage einen Anschluss auf, über den die Fernwärmeverbraucheranlage an einen Fernwärmevorlauf des Fernwärmenetzes anschließbar ist, um dem Fernwärmevorlauf Wärme zu entnehmen. Hierdurch ist erreichbar, dass Wärmeverbraucher der Fernwärmeverbraucheranlage mit Wärme versorgt werden können.

In einer weiteren bevorzugten Ausführung der Erfindung weist die Fernwärmeverbraucheranlage eine Vorlaufübergabestation auf, um dem Fernwärmevorlauf über die Vorlaufübergabestation Wärme zu entnehmen. Besonders vorzugsweise ist die Fernwärmeverbraucheranlage über eine Vorlaufübergabestation an den Fernwärmevorlauf anschließbar, um dem Fernwärmevorlauf über die Vorlaufübergabestation Wärme zu entnehmen. Das bedeutet, dass das in dem Fernwärmevorlauf geführte Medium aus dem Fernwärmevorlauf durch die Vorlaufübergabestation fließt, um zur Wärmeversorgung abgekühlt zu werden. Nach der Abkühlung kann das Medium wieder durch die Vorlaufübergabestation in das Fernwärmenetz, besonders vorzugsweise in den Fernwärmerücklauf zurückfließen. Die Vorlaufübergabestation ist besonders vorzugsweise vom Typ einer Übergabestation. Natürlich kann eine erfindungsgemäße Vorlaufübergabestation auch Teil des Fernwärmenetzes sein.

Die Erfindung weiterbildend ist vorzugsweise vorgesehen, dass die Fernwärmeverbraucheranlage einen zweiten Wärmetauscher mit einem Primärvorlauf und einem Primärrücklauf aufweist, wobei der Primärvorlauf an einen Fernwärmevorlauf des Fernwärmenetzes und der Primärrücklauf an den Fernwärmerücklauf anschließbar ist, um dem Fernwärmevorlauf Wärme zu entnehmen. Besonders vorzugsweise weist die Fernwärmeverbraucheranlage einen zweiten Wärmetauscher mit einem Primärvorlauf aufweist, wobei der Primärvorlauf des zweiten Wärmetauschers zur Wärmeübertragung an einen Fernwärmevorlauf des Fernwärmenetzes anschließbar ist. Durch den zweiten Wärmetauscher kann vorteilhafterweise einem Medium aus dem Fernwärmevorlauf Wärme entnommen werden, um einen Wärmeverbraucher mit Wärme versorgen zu können. Besonders vorzugsweise weist der zweite Wärmetauscher einen Primärrücklauf auf, der an den Fernwärmerücklauf angeschlossen ist. Der zweite Wärmetauscher ist in einer besonders bevorzugten Ausführung der Erfindung mit seiner Primärseite über den Primärvorlauf und den Primärrücklauf an das Fernwärmenetz anschließbar. In dieser Ausführung fließt das in den Fernwärmevorlauf geführte Medium zur Wärmeübertragung aus dem Fernwärmevorlauf über den Primärvorlauf des zweiten Wärmetauschers in den zweiten Wärmetauscher, durchströmt diesen und fließt über den Primärrücklauf in den Fernwärmerücklauf des Fernwärmenetzes. Besonders vorzugsweise ist der zweite Wärmetauscher vom Typ eines Wärmetauschers, der eine Primär- und eine Sekundärseite aufweist, wobei das Medium aus dem Fernwärmevorlauf den Wärmetauscher auf der Primärseite durchströmt, um Wärme an ein Sekundärsystem, das an die Sekundärseite angeschlossen ist, übertragen zu können. Durch den zweiten Wärmetauscher kann vorteilhafterweise eine höhere Temperatur zur Verfügung gestellt werden als durch den ersten Wärmetauscher, da das in dem Fernwärmevorlauf geführte Medium eine höhere Temperatur als das in dem Fernwärmerücklauf geführte Medium aufweist. Diese höhere Temperatur kann z.B. zur Aufheizung und/oder zur Nachheizung von Trinkwarmwasser und/oder zum Abdecken von Spitzenlasten genutzt werden. Vorteilhafterweise kann also eine Fernwärmeverbraucheranlage mit einem erfindungsgemäßen ersten und zweiten Wärmetauscher energiesparend betrieben werden, und jederzeit ausreichend Wärme zur Verfügung stellen.

Vorteilhafterweise können durch die Erfindung zwei Zonen zur Wärmeübertragung, nämlich von dem Fernwärmerücklauf über den ersten Wärmetauscher, und von dem Fernwärmevorlauf über den zweiten Wärmetauscher geschaffen werden. In der ersten Zone wird besonders vorzugsweise Wärme von dem Fernwärmerücklauf, der eine Temperatur von bis zu 70°C aufweisen kann, zu der Fernwärmeverbraucheranlage übertragen. Hierdurch kann die Energie des Fernwärmerücklaufs effektiv genutzt werden. In der zweiten Zone wird besonders vorzugsweise Wärme von dem Fernwärmevorlauf zu der Fernwärmeanlage übertragen. Durch die Wärmeübertragung über die beiden Zonen kann ein höherer Wirkungsgrad des Fernwärmenetzes und/oder der Fernwärmeanlage erreicht werden. Denn dem Fernwärmevorlauf muss nun für die gleiche Wärmeleistung der Fernwärmeanlage weniger Medium, z.B. ca. 30% weniger, entnommen werden. Vorteilhafterweise können hierdurch die Dimensionen der Rohrleitungen, Armaturen und Pumpen verkleinert werden.

Anhand des folgenden Beispiels sollen einige der Vorteile, die durch die erfindungsgemäße Wärmeübertragung über die beiden Zonen erreichbar sind, erläutert werden. In den Tarifverträgen der Fernwärmeversorger sind sogenannte Straf- und Prämiengebühren eingearbeitet. Der geforderte Preis wird durch die Einstellung des vereinbarten Wasservolumens bestimmt. Daraus resultiert, dass je größer die Temperaturspreizung zwischen Vor- und Rücklauf des Primärkreises ist, desto geringer ist das Wasservolumen und je besser ist die Effizienz des gesamten Systems. Bei einem Anschlusswert von 100kW und einer Auskühlung von z.B. 50K wird eine Wassermenge von 1,72m³/h beantragt. Bei einer Spreizung von 40K muss eine Wassermenge von 2,15m³/h angesetzt werden. Hieraus wird ersichtlich, dass nur durch große Temperaturspreizungen, die in den Tarifverträgen vorgesehen sind, große Kosten einsparen lassen. Anhand dieses Beispiels wird zudem klar, dass das Fernwärmenetz über eine Absenkung der Rücklauftemperatur entlastet werden kann, da dem Fernwärmevorlauf für die gleiche Heizleistung weniger Fernwärmewasser entnommen werden muss. Viele Fernwärmeerzeuger sind heute bereits gezwungen, größere Fernwärmepumpen mit höheren Pumpleistungen einzusetzen und Druckanhebungen im Fernwärmenetz vorzunehmen, um die Abnehmer mit der vereinbarten Leistung zu versorgen. Dies kann sogar dazu führen, dass Neuanschlüsse nicht mehr genehmigt werden, oder das Rohrnetz vergrößert werden muss. Diesen Problemstellungen kann vorteilhafterweise durch die erfindungsgemäße Ausgestaltung der Fernwärmeanlage begegnet werden. Speziell bei Geothermieanlagen, bei denen das Tiefenwasser mit sehr hohen Temperaturen aus dem Erdspeicher gefördert wird, sollte die Temperatur des Fernwärmerücklaufs maximal 30 - 40°C betragen, um die Anlage wirtschaftlich betreiben zu können. Auch dies kann vorteilhafterweise durch die Erfindung ermöglicht werden.

In einer bevorzugten Ausgestaltung der Erfindung ist der Primärvorlauf und der Primärrücklauf des zweiten Wärmetauschers über die Vorlaufübergabestation an den Fernwärmevorlauf und den Fernwärmerücklauf anschließbar. Der zweite Wärmetauscher ist also über die Vorlaufübergabestation an den Fernwärmevorlauf anschließbar. Besonders vorzugsweise ist der Primärvorlauf des zweiten Wärmetauschers an den Fernwärmevorlauf des Fernwärmenetzes anschließbar. Besonders vorzugsweise ist der Primärvorlauf des zweiten Wärmetauschers über die Vorlaufübergabestation an den Fernwärmerücklauf anschließbar. Vorteilhafterweise kann hierdurch ein in dem Fernwärmevorlauf geführtes Medium durch die Vorlaufübergabestation zu dem Primärvorlauf des zweiten Wärmetauschers fließen. Besonders vorzugsweise ist der Primärrücklauf des zweiten Wärmetauschers an den Fernwärmerücklauf des Fernwärmenetzes anschließbar. Besonders vorzugsweise ist der Primärrücklauf des zweiten Wärmetauschers über die Vorlaufübergabestation an den Fernwärmerücklauf anschließbar. Die Primärseite des zweiten Wärmetauschers, die den Primärvorlauf und/oder den Primärrücklauf aufweist, ist also besonders vorzugsweise über die Vorlaufübergabestation an das Fernwärmenetz anschließbar. Durch den an den Fernwärmevorlauf anschließbaren Primärvorlauf und/oder den an den Fernwärmerücklauf anschließbaren Primärrücklauf des zweiten Wärmetauschers ist eine Entnahme von Wärme aus dem Fernwärmevorlauf erreichbar, um diese an einen Wärmeverbraucher zu übertragen.

Erfindungsgemäß ist vorzugsweise vorgesehen, dass der Primärrücklauf des ersten Wärmetauschers und der Primärrücklauf des zweiten Wärmetauschers miteinander verbunden sind, um gemeinsam an den Fernwärmerücklauf des Fernwärmenetzes anschließbar zu sein. Besonders vorzugsweise ist der Primärrücklauf des ersten Wärmetauschers an die Rücklaufübergabestation und/oder der Primärrücklauf des zweiten Wärmetauschers an die Vorlaufübergabestation um anschließend an den Fernwärmerücklauf des Fernwärmenetzes anschließbar zu sein. Ein solches System, bei dem die Primärrückläufe des ersten und zweiten Wärmetauschers miteinander verbunden sind, und gemeinsam an den Fernwärmerücklauf des Fernwärmenetzes angeschlossen sind, kann auch als Drei-Leiter-System bezeichnet werden, da die Fernwärmeverbraucheranlage drei Anschlüsse an das Fernwärmenetz aufweist. Diese Anschlüsse sind der Primärvorlauf des ersten Wärmetauschers an den Fernwärmerücklauf, der Primärvorlauf des zweiten Wärmetauschers an den Fernwärmevorlauf sowie der gemeinsame Anschluss des Primärrücklaufs des ersten und zweiten Wärmetauschers an den Fernwärmerücklauf. Vorteilhafterweise kann eine als Drei-Leiter-System ausgeführte Fernwärmeverbraucheranlage mit minimalen Kosten und technischem Aufwand an das Fernwärmenetz anschließbar sein. Bei einem Drei-Leiter-System kann eine Reduzierung der Temperatur des Fernwärmerücklaufs von etwa 70°C auf eine Mischtemperatur von etwa 45°C ermöglicht werden, was die von den meisten Fernwärmebetreibern seit 2007 geforderten maximalen 45°C erfüllt. Hierzu kann z.B. das aus dem ersten Wärmetauscher über den Primärrücklauf strömende Medium eine Temperatur von etwa 30°C - 40°C und/oder das aus dem zweiten Wärmetauscher über den Primärrücklauf strömende Medium eine Temperatur von ca. 55° aufweisen. Daraus ergibt sich eine Mischtemperatur von etwa 45°C.

Die Erfindung weiterbildend ist vorzugsweise vorgesehen, dass die Primärrückläufe des ersten und des zweiten Wärmetauschers getrennt voneinander an den Fernwärmerücklauf des Fernwärmenetzes anschließbar sind. Besonders vorzugsweise ist der Primärrücklauf des ersten Wärmetauschers über die Rücklaufübergabestation und/oder der Primärrücklauf des zweiten Wärmetauschers über die Vorlaufübergabestation an den Fernwärmerücklauf des Fernwärmenetzes anschließbar. Ein solches System kann auch als Vier-Leiter-System bezeichnet werden, da die Fernwärmeverbraucheranlage über vier Anschlüsse an das Fernwärmenetz anschließbar ist. Diese Anschlüsse sind der Primärvorlauf des ersten Wärmetauschers an den Fernwärmerücklauf, der Primärvorlauf des zweiten Wärmetauschers an den Fernwärmevorlauf, der der Primärrücklauf des ersten Wärmetauschers an den Fernwärmerücklauf sowie der Primärrücklauf des zweiten Wärmetauschers an den Fernwärmerücklauf. Durch das Vier-Leiter-System ist eine höhere Sicherheit bei der Wärmeversorgung erreichbar, da das Vier-Leiter-System vorteilhafterweise zwei getrennte Wärmetauscher mit getrennten Anschlüssen aufweist. Sollte z.B. einer der beiden Wärmeübertrager ausfallen, kann weiterhin durch den verbleibenden Wärmetauscher zumindest eine Grundwärmeversorgung sichergestellt werden.

In einer bevorzugten Ausführung der Erfindung weist die Fernwärmeverbraucheranlage ein Wärmeverbrauchersystem auf, das mit der aus dem Fernwärmerücklauf gewonnenen Wärme versorgbar ist. Besonders vorzugsweise weist die Fernwärmeverbraucheranlage ein Wärmeverbrauchersystem auf, das von dem ersten Wärmetauscher mit Wärme versorgbar ist. Die dem Fernwärmerücklauf durch den ersten Wärmetauscher entnommene Wärme kann also dem Wärmeverbrauchersystem zugeführt werden. Besonders vorzugsweise ist das Wärmeverbrauchersystem an einen Sekundärrücklauf und/ oder einen Sekundärvorlauf des ersten Wärmetauschers angeschlossen. Hierbei ist der Sekundärrücklauf der Anschluss der Sekundärseite des Wärmetauschers, der an die Leitung des Wärmeverbrauchersystems angeschlossen wird, von der das zu erwärmende Medium des Wärmeverbrauchersystems geliefert wird. Der Sekundärvorlauf ist der Anschluss der Sekundärseite des Wärmetauschers, der an die Leitung des Wärmeverbrauchersystems angeschlossen wird, über die das von dem Wärmetauscher erwärmte Medium des Wärmeverbrauchersystems dem Wärmeverbrauchersystem zugeführt wird. Das Medium des Wärmeverbrauchersystems kann also zur Erwärmung über den Sekundärrücklauf in den ersten Wärmetauscher geführt werden, diesen durchströmen und, nachdem es erwärmt wurde, über den Sekundärvorlauf in das Wärmeverbrauchersystem zurückfließen. Besonders vorzugsweise weist das Wärmeverbrauchersystem hierzu eine Pumpe auf, die besonders vorzugsweise als Umwälzpumpe wirkt. Die Pumpe kann aber auch als Heizungspumpe oder Ladepumpe wirken. Das Wärmeverbrauchersystem ist indirekt mit dem Fernwärmenetz über den ersten Wärmetauscher verbunden, da kein Medium zwischen dem Fernwärmenetz und dem Wärmeverbrauchersystem ausgetauscht wird.

In einer weiteren bevorzugten Ausführungsform ist an das Wärmeverbrauchersystem zumindest ein Wärmeverbraucher angeschlossen, um über das Wärmeverbrauchersystem von dem ersten Wärmetauscher mit Wärme versorgt werden zu können. Über das Wärmeverbrauchersystem kann also Wärme von dem ersten Wärmetauscher, der die Wärme aus dem Fernwärmerücklauf bezieht, an Wärmeverbraucher wie z.B. Vorwärmer zur Vorwärmung von Medien die auf hohe Temperaturen zu bringen sind, Vorwärmer für Trinkkaltwasser oder Heizungen, Fußbodenheizungen, Decken- und/ oder Wandheizungen, Heizungen von Schwimmbädern, Heizungen zur Erwärmung von Badewasser, Heizungen von Gärtnereien, Wohnungsstationen oder Niedrigenergieanlagen geliefert werden. Über eine Wohnungsstation kann die Heizung und die Warmwasserversorgung einer Wohnung ermöglicht werden. Da bei einer Wohnungsstation das Volumen des Trinkwarmwassers häufig 31 unterschreitet, und somit aufgrund gesetzlicher Vorschriften das Trinkwarmwasser nicht auf die gesetzlich vorgeschriebenen 60°C erwärmt werden muss, kann die gesamte Wärmeversorgung der Wohnungsstation über den erfindungsgemäßen ersten Wärmetauscher erreichbar sein.

In einer weiteren bevorzugten Ausführung der Erfindung ist eine raumlufttechnische Anlage mit Wärme aus dem Fernwärmerücklauf versorgbar. Besonders vorzugsweise ist die raumlufttechnische Anlage hierzu an das Wärmeverbrauchersystem angeschlossen. Eine raumlufttechnische Anlage kann z.B. als Luftwärmsystem ausgeführt sein, und z.B. einen Lufterwärmer, der als Heizregister ausgeführt sein kann, aufweisen. Durch die raumlufttechnische Anlage kann Außenluft, die in ein Gebäude geführt werden soll, erwärmt werden. Besonders vorzugsweise weist die raumlufttechnische Anlage eine erste Stufe, z.B. einen Vorwärmer auf, die mit Wärme aus dem Fernwärmerücklauf versorgbar ist, um Luft vorzuwärmen. Durch die erste Stufe kann vorteilhafterweise Außenluft vorgewärmt werden. Besonders vorzugsweise ist die erste Stufe an das Wärmeverbrauchersystem angeschlossen. Besonders vorzugsweise weist die raumlufttechnische Anlage eine zweite Stufe auf, die mit Wärme aus dem Fernwärmevorlauf versorgbar ist, um Luft nachzuwärmen. Die zweite Stufe kann z.B. als Heizkessel ausgeführt sein.

Besonders vorzugsweise ist das Wärmeverbrauchersystem als Kreislauf ausgeführt, wobei das Medium des Wärmeverbrauchersystems von einem Wärmeverbraucher zu dem ersten Wärmetauscher fließt, um erwärmt zu werden, und anschließend von dem ersten Wärmetauscher zu einem Wärmeverbraucher fließt, um diesen mit Wärme zu versorgen. Besonders vorzugsweise weist das Wärmeverbrauchersystem eine Pumpe auf, um das Medium des Wärmeverbrauchersystems durch die Leitungen des Wärmeverbrauchersystems von dem ersten Wärmetauscher zu einem Wärmeverbraucher und wieder zurück zu pumpen. Besonders vorzugsweise sind die Wärmeverbraucher über Verbindungsleitungen mit einem Vorlauf des Wärmeverbrauchersystems und einem Rücklauf des Wärmeverbrauchersystems verbunden, wobei über den Vorlauf des Wärmeverbrauchersystems dem Wärmeverbraucher warmes Medium des Wärmeverbrauchersystems geliefert wird, das durch den Wärmeverbraucher abgekühlt wird und wieder zurück in den Rücklauf des Wärmeverbrauchersystems geführt wird. Besonders vorzugsweise ist in der Verbindungsleitung über die der Wärmeverbraucher an den Vorlauf und/oder den Rücklauf angeschlossen ist, eine Pumpe angeordnet. Diese Pumpe kann alternativ oder zusätzlich zu der Pumpe des Wärmeverbrauchersystems vorgesehen sein.

Besonders vorzugsweise ist an das Wärmeverbrauchersystem ein Heizungsvorwärmer angeschlossen, über den das Medium eines Wohnraumheizkreislaufs vorerwärmt werden kann. Über einen Heizungsresterwärmer, der besonders vorzugsweise mit dem Sekundärvorlauf und dem Sekundärrücklauf des zweiten Wärmetauschers verbunden ist, kann das Medium des Wohnraumheizkreislaufs auf eine festgelegte Temperatur aufgeheizt werden. Der Heizungsvorwärmer und der Heizungsresterwärmer sind besonders vorzugsweise hintereinander geschaltet. Vorteilhafterweise kann also ein Wärmeverbraucher wie z.B. ein Heizungskreislauf, dessen Wärmebedarf nicht vollständig von dem ersten Wärmetauschers gedeckt werden kann, mit Wärme zur Vorerwärmung von dem ersten Wärmetauscher und mit Wärme zur Resterwärmung von dem zweiten Wärmetauscher beliefert werden.

Die Erfindung weiterbildend ist vorzugsweise vorgesehen, dass die Fernwärmeverbraucheranlage ein Drei-Wege-Ventil aufweist, durch das das Wärmeverbrauchersystem mit der aus dem Fernwärmevorlauf gewonnenen Wärme versorgbar ist. Besonders vorzugsweise ist das Wärmeverbrauchersystem über das Drei-Wege-Ventil von dem zweiten Wärmetauscher der Fernwärmeverbraucheranlage mit Zusatzwärme versorgbar. Sollte das Medium in dem Wärmeverbrauchersystem also über die aus dem Fernwärmerücklauf gewonnene Wärme, die z.B. die von dem ersten Wärmetauscher geliefert wird, nicht ausreichend erwärmt werden können, kann vorteilhafterweise über das Drei-Wege-Ventil ein Medium, das von dem zweiten Wärmetauscher erwärmt wurde, beigemischt werden. Über das Drei-Wege-Ventil kann das Wärmeverbrauchersystem von dem ersten und/oder zweiten Wärmetauscher mit Wärme versorgt werden. Das Wärmeverbrauchersystem kann also bei Bedarf durch das Drei-Wege-Ventil mit Zusatzwärme von dem zweiten Wärmetauscher versorgt werden, so dass bei unzureichender Wärmelieferung durch den ersten Wärmetauscher, z.B. bei Spitzenlasten oder bei einem defekten ersten Wärmetauscher der zweite Wärmetauscher dem Wärmeverbrauchersystem Wärme zuführt. Hierdurch kann vorteilhafterweise sichergestellt werden, dass ein an das Wärmeverbrauchersystem angeschlossener Wärmeverbraucher jederzeit mit der benötigten Wärme versorgt werden kann. Besonders vorzugsweise sind der Sekundärvorlauf des zweiten Wärmetauschers und der Sekundärvorlauf des ersten Wärmetauschers an das Drei-Wege-Ventil angeschlossen. Besonders vorzugsweise sind der Sekundärrücklauf des zweiten Wärmetauschers und der Sekundärrücklauf des ersten Wärmetauschers an das Drei-Wege-Ventil angeschlossen.

In einer Ausführung der Erfindung weist die Fernwärmeverbraucheranlage einen Trinkwassererwärmer zur Erwärmung von Trinkwarmwasser auf, der mit der aus dem Fernwärmerücklauf gewinnbaren Wärme zur Vorerwärmung des Trinkwarmwassers versorgbar ist. Besonders vorzugsweise ist der Trinkwassererwärmer von dem ersten Wärmetauscher zur Vorerwärmung des Trinkwarmwassers mit Wärme versorgbar. Vorteilhafterweise kann hierdurch schrittweise zu erwärmendes Trinkwarmwasser durch Wärme aus dem Fernwärmerücklauf vorerwärmt werden, um bei einer anschließenden Resterwärmung des Trinkwarmwassers aufgrund der geringeren Temperaturdifferenz weniger Wärmeenergie zu benötigen. So kann z.B. 10°C kaltes Wasser, das auf 60°C erwärmt werden soll, über die von dem ersten Wärmetauscher gelieferte Wärme auf 40°C vorerwärmt werden. Anschließend muss statt 10°C kaltes Wasser auf 60°C zu erwärmen nur noch 40°C warmes Wasser mit dem zweiten Wärmetauscher auf 60°C erwärmt werden. Durch die Vorerwärmung des Trinkwarmwassers über den ersten Wärmetauscher kann der Energieverbrauch der Fernwärmeverbraucheranlage weiter reduziert werden. Es sind Ausführungen der Erfindung denkbar, in denen der Wirkungsgrad der Fernwärmeverbraucheranlage erheblich erhöht wird. Besonders vorzugsweise weist der Trinkwassererwärmer einen ersten Teiltrinkwassererwärmer auf, wobei der erste Teiltrinkwassererwärmer von dem ersten Wärmetauscher zur Vorerwärmung des Trinkwarmwassers mit Wärme versorgbar ist. Besonders vorzugsweise wird dem Trinkwarmwasser von dem ersten Wärmetauscher zumindest 30% der Temperaturdifferenz aus der Temperatur auf die das Trinkwarmwasser erwärmt werden soll und der Temperatur des zu erwärmenden Trinkwarmwassers zugeführt. So wird z.B. 10°C kaltes Trinkwarmwasser von dem ersten Teiltrinkwassererwärmer auf zumindest 40°C erwärmt, wenn das Trinkwarmwasser von dem Trinkwassererwärmer auf 60°C erwärmt werden soll. Besonders vorzugsweise ist der erste Teiltrinkwassererwärmer als Wärmetauscher ausgeführt, der besonders vorzugsweise in einem unteren Bereich des Trinkwassererwärmers angeordnet ist. Der erste Teiltrinkwassererwärmer kann erfindungsgemäß als Vorwärmsystem beliebiger Art, z.B. als Plattentauscher, Gegenstromtauscher oder Vorwärmspeicher, ausgeführt sein. Besonders vorzugsweise ist der erste Teiltrinkwassererwärmer an das Wärmeverbrauchersystem angeschlossen. Durch den ersten Wärmetauscher können natürlich auch weitere Wärmeverbraucher, die einen hohen Wärmebedarf aufweisen, und der nicht vollständig von dem ersten Wärmetauschers gedeckt werden kann, mit Wärme zur Vorerwärmung versorgt werden.

In einer bevorzugten Ausführung der Erfindung weist die Fernwärmeverbraucheranlage einen Trinkwassererwärmer zur Erwärmung von Trinkwarmwasser auf, der mit der aus dem Fernwärmevorlauf gewinnbaren Wärme zur Resterwärmung des Trinkwarmwassers versorgbar ist. Besonders vorzugsweise ist der Trinkwassererwärmer von dem zweiten Wärmetauscher zur Resterwärmung des Trinkwarmwassers mit Wärme versorgbar. Besonders vorzugsweise weist der Trinkwassererwärmer einen zweiten Teiltrinkwassererwärmer auf, wobei der zweite Teiltrinkwassererwärmer von dem zweiten Wärmetauscher zur Resterwärmung des Trinkwarmwassers auf eine voreingestellte Temperatur, z.B. 60°C mit Wärme versorgbar ist. Besonders vorzugsweise wird das Trinkwarmwasser durch den zweiten Teiltrinkwassererwärmer auf eine voreingestellte Temperatur, z.B. auf 60°C erwärmt. Besonders vorzugsweise ist der zweite Teiltrinkwassererwärmer als Wärmetauscher ausgeführt, der besonders vorzugsweise in einem oberen Bereich des Trinkwassererwärmers angeordnet ist. Der zweite Teiltrinkwassererwärmer kann erfindungsgemäß auch als Vorwärmsystem beliebiger Art, z.B. als Plattentauscher, ausgeführt sein. Durch den zweiten Wärmetauscher können natürlich auch weitere Wärmeverbraucher zur Resterwärmung mit Wärme versorgt werden, die zur Vorerwärmung von dem ersten Wärmetauscher mit Wärme versorgt wurden.

In einer besonders bevorzugten Ausführungsform der Erfindung, die sich vorteilhafterweise für größere Fernwärmeverbraucheranlagen eignet, ist der Trinkwassererwärmer in einen ersten Teiltrinkwassererwärmer und einen zweiten Teiltrinkwassererwärmer aufgeteilt, wobei ein oberer Wärmetauscher im ersten Teiltrinkwassererwärmer und ein unterer Wärmetauscher im zweiten Teiltrinkwassererwärmer angebracht ist und wobei eine Verbindungsleitung von der Oberseite des zweiten Teiltrinkwassererwärmers zur Unterseite des ersten Teiltrinkwassererwärmers vorgesehen ist. Dieser zweiteilige Aufbau des Trinkwassererwärmers hat nicht nur die bekannten Vorteile (Erleichterung bei der Herstellung, Montage, Wartung), sondern führt auch noch zu einer besseren Trennung zwischen dem oberen (heißeren) und dem unteren (kälteren) Bereich des Trinkwassererwärmers bzw. der Wärmetauscher. Hierbei ist es von Vorteil, wenn die Verbindungsleitung am oberen Anschlusspunkt des zweiten Trinkwassererwärmers und am untersten Punkt des ersten Trinkwassererwärmers angeschlossen ist.

Vorteilhafterweise können durch die Trennung von erstem und zweitem Teiltrinkwassererwärmer zwei Zonen zur Erwärmung des Trinkkaltwassers geschaffen werden. In der ersten Zone mit dem oberen Wärmetauscher wird das zirkulierte Trinkwarmwasser auf seiner vorgeschriebenen Temperatur gehalten, so dass es bei ca. 60°C über einen Trinkwarmwasseraustritt in den Kreislauf gelangt, und aus diesem mit ca. 55°C (oder heißer) über den Zirkulationskreislauf wieder zurückgeführt wird. Der Wärmeverlust des Trinkwarmwassers in seinem Kreislauf wird also durch den oberen Wärmetauscher ausgeglichen. In der zweiten Zone mit dem unteren Wärmetauscher wird das über den Trinkkaltwassereintritt zugeführte Trinkkaltwasser vorerwärmt. Bei einer Trinkwarmwasserentnahme wird diesem unteren Bereich, also der zweiten Zone, Trinkkaltwasser zugeführt. Somit liegt im unteren Bereich, also im Bereich des unteren Wärmetauschers, eine niedrigere Temperatur vor als im oberen Bereich, in welchem der obere Wärmetauscher vorgesehen ist. Da der untere Wärmetauscher besonders vorzugsweise von dem ersten und der obere Wärmetauscher besonders vorzugsweise von dem zweiten Wärmetauscher mit warmem Medium versorgt wird, kann eine effektive Erwärmung des Trinkkaltwassers ermöglicht werden. Weiter kann einer Verkalkung entgegengewirkt werden.

Erfindungsgemäß ist vorzugsweise vorgesehen, dass der erste Wärmetauscher vom Typ eines Gegenstromwärmetauschers ist. Bei einem Gegenstromwärmetauscher wird die Wärme im Gegenstromprinzip, auch Gegenstromverfahren genannt, übertragen. Das bedeutet, dass der Wärmetauscher so an ein Primär- und ein Sekundärsystem angeschlossen ist, dass die Medien des Primär- und Sekundärsystems bei der Wärmeübertragung in entgegengesetzten Richtungen aneinander vorbeigeführt werden. Besonders vorzugsweise ist der zweite Wärmetauscher vom Typ eines Gegenstromwärmetauschers.

In einer bevorzugten Ausführung der Erfindung ist der Primärvorlauf des ersten Wärmetauschers über eine Leitung an den Fernwärmerücklauf anschließbar, wobei eine Leitungsöffnung der Leitung so in dem Fernwärmerücklauf anordnenbar ist, dass die Leitung mit der Leitungsöffnung entgegen einer Strömungsrichtung des Fernwärmerücklaufs orientiert ist. Die Erfindung weiterbildend ist vorzugsweise vorgesehen, dass der Fernwärmerücklauf an dem Anschluss zur Versorgung der Fernwärmeverbraucheranlage mit Wärme aus dem Fernwärmerücklauf eine Leitung aufweist, und eine Leitungsöffnung der Leitung so in dem Fernwärmerücklauf angeordnet ist, dass die Leitung mit der Leitungsöffnung entgegen einer Strömungsrichtung des Fernwärmerücklaufs orientiert ist. Die Strömungsrichtung des Fernwärmerücklaufs ist die Richtung, in die ein Medium im Fernwärmerücklauf in Richtung des Fernheizwerks strömt. Die Leitung ist dann mit der Leitungsöffnung entgegen der Strömungsrichtung orientiert, wenn die von der Leitungsöffnung aufgespannte Fläche eine der Leitung abgewandte Flächennormale aufweist, und die Flächennormale zumindest teilweise gegen die Strömungsrichtung gerichtet ist. Durch diese Anordnung der Leitungsöffnung in dem Fernwärmerücklauf kann erreicht werden, dass das Medium aufgrund des Drucks und der Strömungsgeschwindigkeit in dem Fernwärmerücklauf in die Leitung gedrückt wird, und durch die Leitung zu dem ersten Wärmetauscher geführt wird. Vorteilhafterweise kann hierdurch auf den Einsatz einer Pumpe verzichtet werden. Besonders vorzugsweise ist die Leitungsöffnung in einem Winkel von ca. 45° zu der Strömungsrichtung geneigt. Besonders vorzugsweise ist die Leitung rohrförmig ausgebildet.

In einer weiteren bevorzugten Ausführungsform ist der Primärrücklauf des ersten Wärmetauschers über eine Leitung an den Fernwärmerücklauf anschließbar, wobei eine Leitungsöffnung der Leitung so in dem Fernwärmerücklauf anordnenbar ist, dass die Leitung mit der Leitungsöffnung in eine Strömungsrichtung des Fernwärmerücklaufs orientiert ist. Erfindungsgemäß ist vorzugsweise vorgesehen, dass der Fernwärmerücklauf einen Anschluss mit einer Leitung für eine Fernwärmeverbraucheranlage aufweist, um von der Fernwärmeverbraucheranlage abgekühltes Medium in den Fernwärmerücklauf zu leiten, und eine Leitungsöffnung der Leitung so in dem Fernwärmerücklauf angeordnet ist, dass die Leitung mit der Leitungsöffnung in eine Strömungsrichtung des Fernwärmerücklaufs orientiert ist. Die Leitung ist dann mit der Leitungsöffnung in die Strömungsrichtung orientiert, wenn die von der Leitungsöffnung aufgespannte Fläche eine der Leitung abgewandte Flächennormale aufweist, die zumindest teilweise in Strömungsrichtung gerichtet ist. Durch diese Anordnung der Leitungsöffnung in dem Fernwärmerücklauf kann durch das an der Leitungsöffnung vorbeiströmende Medium gemäß dem Gesetz von Bernoulli ein dynamischer Druckabfall entstehen, der bewirken kann, dass an der Leitungsöffnung eine absaugende Wirkung entsteht, und das Medium von dem ersten Wärmetauscher über die Leitung in den Fernwärmerücklauf strömt. Bei einem separat angeschlossenen Primärrücklauf des zweiten Wärmetauschers, also bei einem sogenannten Vier-Leiter-System, ist der Primärrücklauf des zweiten Wärmetauschers besonders vorzugsweise über eine rohrförmige Leitung an den Fernwärmerücklauf anschließbar, wobei eine Leitungsöffnung so in dem Fernwärmerücklauf anordnenbar ist, dass die Leitung mit der Leitungsöffnung in einer Strömungsrichtung des Fernwärmerücklaufs orientiert ist. Besonders vorzugsweise ist die Leitungsöffnung der Leitung, über die der Primärrücklauf des ersten und/oder zweiten Wärmetauschers an den Fernwärmerücklauf anschließbar ist, in einem Winkel von ca. 45° zu der Strömungsrichtung geneigt. Besonders vorzugsweise ist diese Leitung rohrförmig ausgebildet.

Besonders vorzugsweise sind der Primärvorlauf und der Primärrücklauf des ersten Wärmetauschers so an den Fernwärmerücklauf angeschlossen, dass der Anschluss des Primärrücklaufs dem Anschluss des Primärvorlaufs an den Fernwärmerücklauf in Strömungsrichtung nachgelagert ist. Dies kann als Vorteil bei einem geringen Leitungsdurchmesser des Fernwärmerücklaufs erweisen.

In einer bevorzugten Ausführung der Erfindung weist das Fernwärmenetz einen Fernwärmevorlauf auf, wobei der Fernwärmevorlauf einen Anschluss für eine Fernwärmeverbraucheranlage aufweist, um die Fernwärmeverbraucheranlage mit Wärme aus dem Fernwärmevorlauf zu versorgen. Hierdurch ist erreichbar, dass Wärmeverbraucher der Fernwärmeverbraucheranlage mit Wärme versorgt werden können.

Über die Anschlüsse des Fernwärmevorlaufs und/oder des Fernwärmerücklaufs können in einer bevorzugten Ausführung der Erfindung Wärmetauscher einer Fernwärmeverbraucheranlage, z.B. ein erfindungsgemäßer erster und/oder zweiter Wärmetauscher anschließbar sein, um die Fernwärmeverbraucheranlage mit Wärme aus dem Fernwärmevorlauf und/oder Fernwärmerücklauf versorgen zu können.

### Kurzbeschreibung der Zeichnungen

Weitere vorteilhafte Ausgestaltungen werden nachfolgend an Hand dreier in den Zeichnungen dargestellten Ausführungsbeispielen, auf welche die Erfindung jedoch nicht beschränkt ist, näher beschrieben.

Es zeigen schematisch:
Fig. 1 eine schematische Darstellung eines aus dem Stand der Technik bekannten Fernwärmesystems mit einer Fernwärmeverbraucheranlage, die an ein Fernwärmenetz angeschlossen ist;
Fig. 2 eine schematische Darstellung eines Fernwärmesystems mit einer an ein Fernwärmenetz angeschlossenen Fernwärmeverbraucheranlage, und mit drei Anschlüssen an das Fernwärmenetz;
Fig.3 eine schematische Darstellung eines Fernwärmesystems mit einer an ein Fernwärmenetz angeschlossenen Fernwärmeverbraucheranlage mit einem Wärmeverbrauchersystem und mit drei Anschlüssen an das Fernwärmenetz;
Fig. 4 eine schematische Darstellung des Anschlusses des Primärvorlaufs des ersten Wärmetauschers sowie des Primärrücklaufs des ersten und zweiten Wärmetauschers an den Fernwärmerücklauf;
Fig.5 eine schematische Darstellung eines Fernwärmesystems mit einer an ein Fernwärmenetz angeschlossenen Fernwärmeverbraucheranlage mit drei Anschlüssen an das Fernwärmenetz in einer weiteren Ausführungsform;
Fig. 6 eine schematische Darstellung eines Fernwärmesystems mit einer an ein Fernwärmenetz angeschlossenen Fernwärmeverbraucheranlage mit vier Anschlüssen an das Fernwärmenetz;
Fig.7 eine schematische Darstellung eines Fernwärmesystems mit einer an ein Fernwärmenetz angeschlossenen Fernwärmeverbraucheranlage mit einem Wärmeverbrauchersystem und mit vier Anschlüssen an das Fernwärmenetz;
und schließlich
Fig.8 eine schematische Darstellung einer Fernwärmeverbraucheranlage mit vier Anschlüssen an das Fernwärmenetz in einer weiteren Ausführungsform.

### Ausführliche Beschreibung anhand von vier Ausführungsbeispielen

Bei der nachfolgenden Beschreibung von vier bevorzugten Ausführungsformen der vorliegenden Erfindung bezeichnen gleiche Bezugszeichen gleiche oder vergleichbare Komponenten.

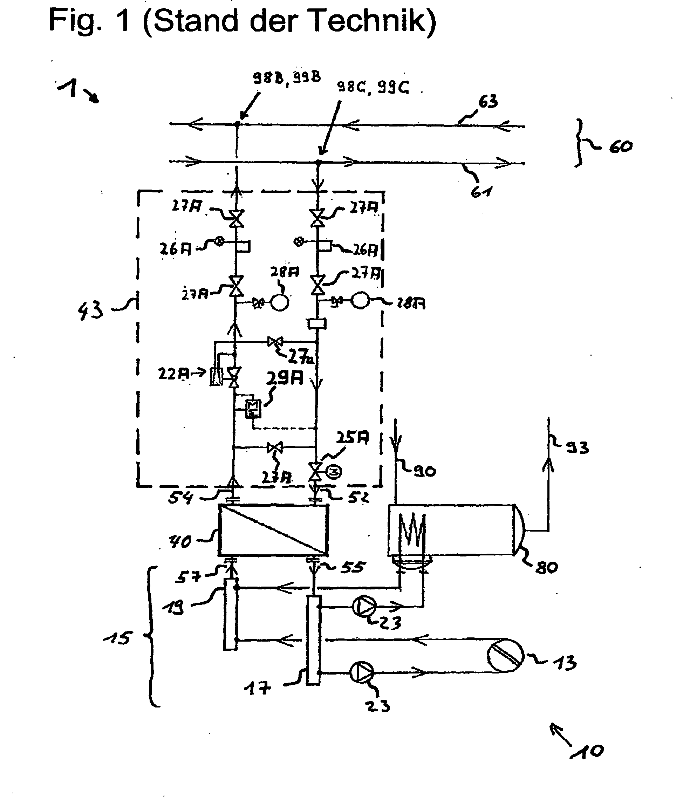

Ein aus dem Stand der Technik bekanntes Fernwärmesystem 1 mit einer an ein Fernwärmenetz 60 angeschlossenen Fernwärmeverbraucheranlage 10 ist in Fig. 1 dargestellt. Die Fernwärmeverbraucheranlage 10 weist einen Anschluss 98C auf, über den die Fernwärmeverbraucheranlage 10 an einen Fernwärmevorlauf 61 des Fernwärmenetzes 60 angeschlossen ist, um dem Fernwärmevorlauf 61 Wärme zu entnehmen. Zudem weist die Fernwärmeverbraucheranlage 10 einen weiteren Anschluss 98B auf, über den die Fernwärmeverbraucheranlage 10 an einen Fernwärmerücklauf 63 angeschlossen ist. Gleichermaßen weist der Fernwärmevorlauf 61 des Fernwärmenetz 60 einen Anschluss 99C und der Fernwärmerücklauf 63 einen Anschluss 99B für die Fernwärmeverbraucheranlage 10 auf, um die Fernwärmeverbraucheranlage 10 mit Wärme aus dem Fernwärmevorlauf 61 zu versorgen. Weiter weist die Fernwärmeverbraucheranlage 10 eine Vorlaufübergabestation 43 auf, die vom Typ einer Übergabestation ist, um dem Fernwärmevorlauf 61 des Fernwärmenetzes 60 über die Vorlaufübergabestation 43 Wärme zu entnehmen. Die Vorlaufübergabestation 43 weist Absperrventile 27A, Entlüftungsventile 26A, Manometer 28A, einen Differenzdruckregler 22A, einen Wärmemengenzähler 29A sowie ein motorbetriebenes Regelventil 25A auf.

Bei der Fernwärmeverbraucheranlage 10 ist ein zweiter Wärmetauscher 40 über einen Primärvorlauf 52 an den Fernwärmevorlauf 61 und über einen Primärrücklauf 54 an einen Fernwärmerücklauf 63 des Fernwärmenetzes 60 angeschlossen. Der Primärvorlauf 52 des zweiten Wärmetauschers 40 ist über das motorbetriebene Regelventil 52, und zwei seriell angeordnete Absperrventile 27A an den Fernwärmevorlauf 61 angeschlossen. Über das motorbetriebene Regelventil 25A wird die Zufuhr des in dem Fernwärmevorlauf 61 geführten Mediums so geregelt, dass das Medium nur bei Wärmebedarf durch den zweiten Wärmetauscher 40 fließt. Der Primärrücklauf 54 des zweiten Wärmetauschers 40 ist über zwei seriell angeordnete Absperrventile 27A an den Fernwärmerücklauf 63 angeschlossen. Zwischen den beiden Absperrventilen 27A des Primärrücklaufs 54 sowie des Primärvorlaufs 52 des zweiten Wärmetauschers 40 ist jeweils ein Entlüftungsventil 26A angeordnet. Zudem ist zwischen dem Absperrventil 27A, das dem zweiten Wärmetauscher 40 zugewandt ist und dem zweiten Wärmetauscher 40 ein Manometer 28A jeweils an dem Primärvorlauf 52 und dem Primärrücklauf 54 angeordnet, um den Druck innerhalb des Primärvorlaufs 52 und Rücklaufs 54 anzuzeigen. Dieses Manometer 28A ist an dem Primärvorlauf 52 zwischen dem Absperrventil 27A und dem motorbetriebenen Regelventil 25A angeordnet. Zwischen Primärvorlauf 52 und Primärrücklauf 54 des zweiten Wärmetauschers 40 sind zudem ein Differenzdruckregler 22A sowie ein Wärmemengenzähler 29A angeordnet. Die Fernwärmeverbraucheranlage 10 ist also über einen Wärmemengenzähler 29A mit dem Fernwärmenetz 60 verbunden. Der Differenzdruckregler 22A sowie der Wärmemengenzähler 29A befinden sich, wie auch die Manometer 28A, zwischen dem Absperrventil 27A, das dem zweiten Wärmetauscher 40 zugewandt ist und dem zweiten Wärmetauscher 40, wobei sich der Wärmemengenzähler 29A zwischen dem zweiten Wärmetauscher 40 und dem Differenzdruckregler 22A befindet. Das motorbetriebene Regelventil 25A ist zwischen dem Anschluss des Wärmemengenzählers 29A und dem zweiten Wärmetauscher 40 angeordnet. Parallel zu dem Wärmemengenzähler 29A ist ein Absperrventil 27A angeordnet.

Sekundärseitig ist der zweite Wärmetauscher 40 über einen Sekundärvorlauf 55 und einen Sekundärrücklauf 57 an ein Wärmeverbrauchersystem 15 angeschlossen, um einen Wärmeverbraucher 13 und einen Trinkwassererwärmer 80 mit Wärme zu versorgen. Hierzu ist der Sekundärvorlauf 55 an einen Vorlauf 17 des Wärmeverbrauchersystems 15, und der Sekundärrücklauf 57 an einen Rücklauf 19 des Wärmeverbrauchersystems 15 angeschlossen. Der Wärmeverbraucher 13 und der Trinkwassererwärmer 80 sind jeweils über eine Pumpe 23 an den Vorlauf 17 des Wärmeverbrauchersystems 15 angeschlossen. Das zu erwärmende Trinkkaltwasser wird dem Trinkwassererwärmer 80 über einen Trinkkaltwassereintritt 90 zugeführt, in diesem erwärmt, und verlässt den Trinkwassererwärmer 80 als Trinkwarmwasser über den Trinkwarmwasseraustritt 93.

Ein solches System wird auch als Zwei-Leiter-System bezeichnet, da die Fernwärmeverbraucheranlage 10 über zwei Anschlüsse, nämlich den Primärvorlauf 51 und den Primärrücklauf 53 an ein Fernwärmenetz 60 angeschlossen ist. Bei einem solchen System wird Wärme aus dem Fernwärmevorlauf 61 des Fernwärmenetzes 60 über den zweiten Wärmetauscher 40 an die Wärmeverbraucher 13 übertragen. Bei einer solchen als zwei-Leiter-System ausgeführten Fernwärmeverbraucheranlage 10 kann die Gefahr bestehen, dass die Temperatur des in dem Fernwärmerücklauf 63 geführten Mediums stark ansteigt. Dies kann einem wirtschaftlichen Betrieb des Fernwärmenetzes 60 schaden.

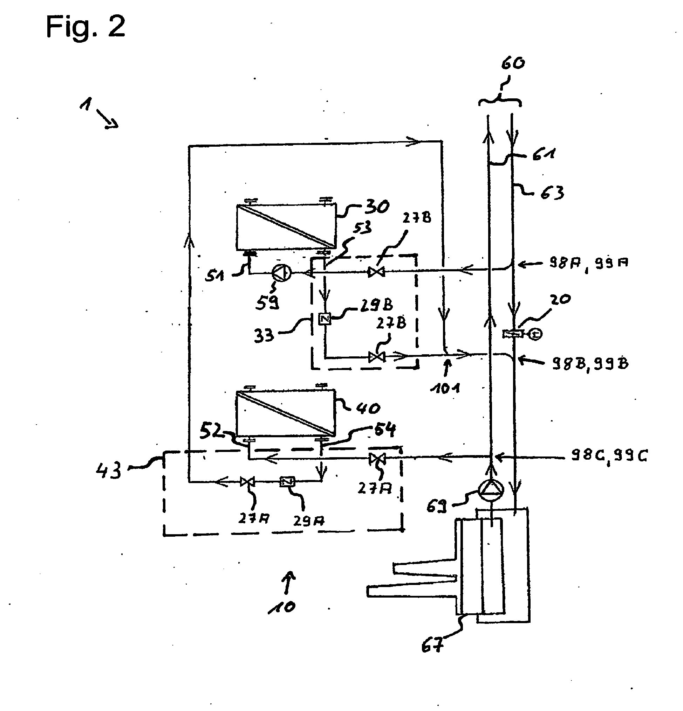

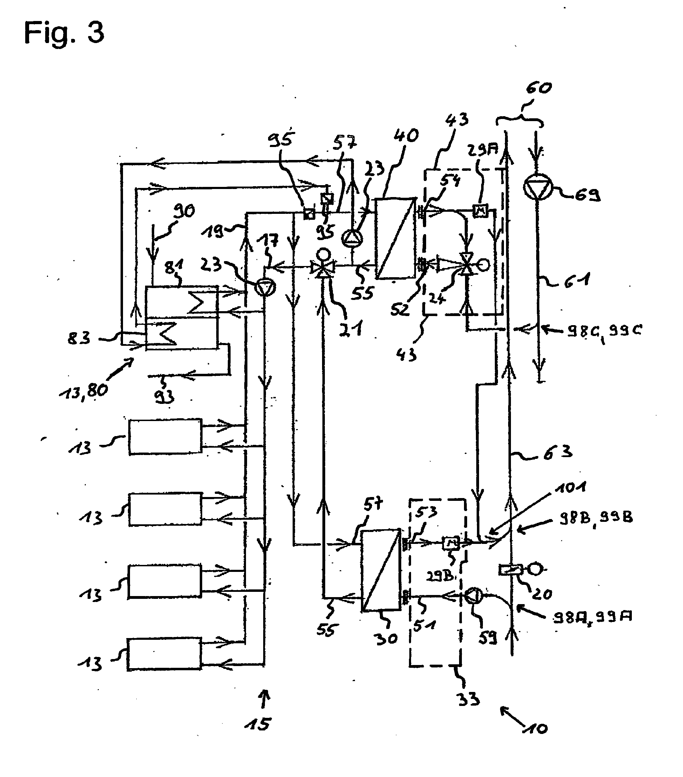

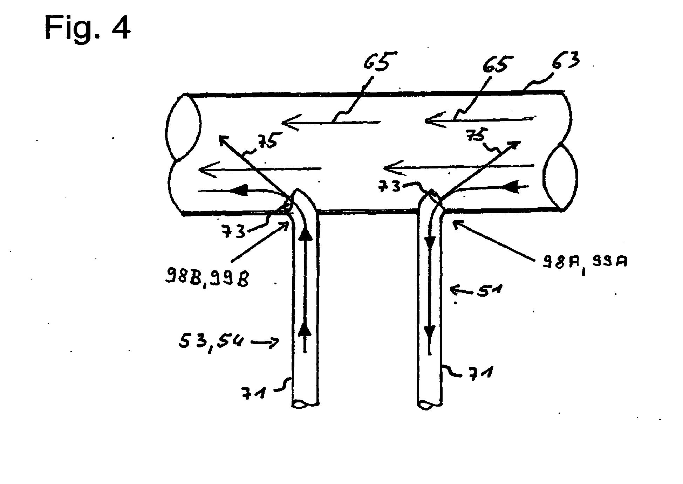

Das erste Ausführungsbeispiel wird im Folgenden anhand der Fig. 2 bis 4 erläutert. In Fig. 2 ist eine schematische Darstellung eines Fernwärmesystems 1 mit einem Fernwärmenetz 60 und einer Fernwärmeverbraucheranlage 10 mit drei Anschlüssen an das Fernwärmenetz 60 zur Wärmeversorgung von Wärmeverbrauchern 13 aus dem Fernwärmenetz 60 gezeigt. Fig. 3 zeigt eine schematische Darstellung eines Fernwärmesystems mit einem Fernwärmenetz 60 und einer Fernwärmeverbraucheranlage 10 mit einem Wärmeverbrauchersystem 15 und mit drei Anschlüssen an das Fernwärmenetz 60. In Fig. 4 ist eine schematische Darstellung des Anschlusses des Primärvorlaufs 51 des ersten Wärmetauschers 30 sowie des Primärrücklaufs 53 des ersten Wärmetauschers 30 und des Primärrücklaufs 54 des zweiten Wärmetauschers 40 an den Fernwärmerücklauf 63 dargestellt. Bei dem in Fig. 2 bis 4 gezeigten Ausführungsbeispiel handelt es sich um ein Drei-Leiter-System, das über ein Fernwärmenetz 60 mit Wärme versorgt wird. Hierzu wird von einem Fernheizwerk 67 ein erwärmtes Medium durch eine Fernwärmepumpe 69 über den Fernwärmevorlauf 61 zu der als Drei-Leiter-System ausgeführten Fernwärmeverbraucheranlage 10 gefördert.

Die Fernwärmeverbraucheranlage 10 weist vier Wärmeverbraucher 13 sowie einen als Wärmeverbraucher 13 ausgeführten Trinkwassererwärmer 80 auf, die mit Wärme aus dem Fernwärmenetz 60 versorgbar sind. Die Fernwärmeverbraucheranlage 10 weist einen Anschluss 98A auf, über die die Fernwärmeverbraucheranlage 10 an einen Fernwärmerücklauf 63 des Fernwärmenetzes 60 angeschlossen ist, um dem Fernwärmerücklauf 63 Wärme zur Versorgung der Wärmeverbraucher 13 zu entnehmen. Weiter weist die Fernwärmeverbraucheranlage 10 einen Anschluss 98B auf, über den die Fernwärmeverbraucheranlage 10 an den Fernwärmerücklauf 63 angeschlossen ist. Über den Anschluss 98B kann ein Medium, das dem Fernwärmerücklauf 63 über den Anschluss 98A entnommen wurde, wieder in den Fernwärmerücklauf 63 geleitet werden. Der Fernwärmerücklauf 63 des Fernwärmenetzes 60 weist einen Anschluss 99A für die Fernwärmeverbraucheranlage 10 auf, um die Fernwärmeverbraucheranlage 10 mit Wärme aus dem Fernwärmerücklauf 63 zu versorgen. Der Fernwärmerücklauf 63 weist weiter einen Anschluss 99B für die Fernwärmeverbraucheranlage 10 auf. Über den Anschluss 99B kann ein Medium, das dem Fernwärmerücklauf 63 über den Anschluss 99A entnommen wurde, wieder in den Fernwärmerücklauf 63 geleitet werden.

Weiter weist die Fernwärmeverbraucheranlage 10 eine Rücklaufübergabestation 33, die vom Typ einer Übergabestation ist auf, um dem Fernwärmerücklauf 63 über die Rücklaufübergabestation 33 Wärme zu entnehmen. Um Wärme von dem Fernwärmerücklauf 63 an Wärmeverbraucher 13 zu übertragen, weist die Fernwärmeverbraucheranlage 10 einen ersten Wärmetauscher 30 mit einem Primärvorlauf 51 auf, der über die Rücklaufübergabestation 33 an den Fernwärmerücklauf 63 des Fernwärmenetzes 60 angeschlossen ist. Der Primärvorlauf 51 des ersten Wärmetauschers 30 ist hierbei über den Anschluss 98A der Fernwärmeverbraucheranlage 10 an den Anschluss 99A des Fernwärmenetzes 60, und somit an den Fernwärmerücklauf 63 angeschlossen. Weiter weist der erste Wärmetauscher 30 einen Primärrücklauf 53 auf, der über die Rücklaufübergabestation 33 an den Fernwärmerücklauf 63 angeschlossen ist. Der Primärrücklauf 53 des ersten Wärmetauschers 30 ist hierbei über den Anschluss 98B der Fernwärmeverbraucheranlage 10 an den Anschluss 99B des Fernwärmenetzes 60, und somit an den Fernwärmerücklauf 63 angeschlossen. Die Fernwärmeverbraucheranlage 10 weist also einen ersten Wärmetauscher 30 mit einem Primärvorlauf 51 und einem Primärrücklauf 53 auf, wobei der Primärvorlauf 51 und der Primärrücklauf 53 des ersten Wärmetauschers 30 an den Fernwärmerücklauf 63 über die Rücklaufübergabestation 33 angeschlossen sind, um dem Fernwärmerücklauf 63 Wärme zu entnehmen. Die Rücklaufübergabestation 33 weist Absperrventile 27B, Entlüftungsventile, Manometer, einen Differenzdruckregler, einen Wärmemengenzähler 29B sowie ein motorbetriebenes Regelventil auf, die aus Darstellungsgründen in den Fig. 2 und 3 nur zum Teil gezeigt sind, und die wie in Fig. 1 dargestellt verschaltet sind.

Der Primärvorlauf 51 und der Primärrücklauf 53 des ersten Wärmetauschers 30 sind so an den Fernwärmerücklauf 63 angeschlossen, dass der Anschluss 98B dem Anschluss 98A der Fernwärmeverbraucheranlage 10 in Strömungsrichtung 65 nachgelagert ist. Gleichermaßen ist der Anschluss 99B dem Anschluss 99A des Fernwärmerücklaufs 63 in Strömungsrichtung 65 nachgelagert. Hierbei ist zwischen dem Anschluss 98B, 99B und dem Anschluss 98A, 99A eine Drosselklappe 20 in dem Fernwärmerücklauf 63 angeordnet. Durch diese Drosselklappe 20 kann der Fließdruck in dem Fernwärmerücklauf 63 so gesteuert werden, dass der Druck und/oder die Strömungsgeschwindigkeit in dem Primärvorlauf 51 des ersten Wärmetauschers 30 erhöht wird. Hierdurch wird die Wärme effektiver an die Wärmeverbraucher 13 übertragen.

Zwischen dem Primärvorlauf 51 des ersten Wärmetauschers 30 und dem Anschluss 98A, 99A an den Fernwärmerücklauf 63 ist eine Förderpumpe 59 angeordnet. Durch die Förderpumpe 59 kann das Medium, das in Strömungsrichtung 65 durch den Fernwärmerücklauf 63 zu dem Fernheizwerk 67 strömt, aus dem Fernwärmerücklauf 63 durch den Primärvorlauf 51 in den ersten Wärmetauscher 30 fließen, diesen durchströmen, und weiter durch den Primärrücklauf 53 des ersten Wärmetauschers 30 wieder in den Fernwärmerücklauf 63 zurückfließen. Während das Medium den ersten Wärmetauscher 30 durchströmt, wird von der Primärseite des ersten Wärmetauschers 30 Wärme an die Sekundärseite des ersten Wärmetauschers 30 übertragen.

Die Fernwärmeverbraucheranlage 10 weist einen Anschlüsse 98C auf, über die die Fernwärmeverbraucheranlage 10 an den Fernwärmevorlauf 61 und den Fernwärmerücklauf 63 des Fernwärmenetzes 60 angeschlossen ist, um dem Fernwärmevorlauf 61 Wärme zu entnehmen. Ebenso weist der Fernwärmevorlauf 61 einen Anschluss 99C für die Fernwärmeverbraucheranlage 10 auf, um die Fernwärmeverbraucheranlage 10 mit Wärme aus dem Fernwärmevorlauf 61 zu versorgen.

Weiter weist die Fernwärmeverbraucheranlage 10 eine Vorlaufübergabestation 43, die vom Typ einer Übergabestation ist auf, um dem Fernwärmevorlauf 61 über die Vorlaufübergabestation 43 Wärme zu entnehmen. Hierzu weist die Fernwärmeverbraucheranlage 10 einen zweiten Wärmetauscher 40 mit einem Primärvorlauf 52 und einem Primärrücklauf 54 auf, wobei der Primärvorlauf 52 des zweiten Wärmetauschers 40 über die Vorlaufübergabestation 43 an den Fernwärmevorlauf 61 des Fernwärmenetzes 60 und der Primärrücklauf 54 über die Vorlaufübergabestation 43 an den Fernwärmerücklauf 63 angeschlossen ist, um dem Fernwärmevorlauf 61 Wärme zu entnehmen. Der Primärvorlauf 52 des zweiten Wärmetauschers 40 ist hierbei über den Anschluss 98C der Fernwärmeverbraucheranlage 10 an den Anschluss 99C des Fernwärmenetzes 60, und somit an den Fernwärmevorlauf 61 angeschlossen. Der Primärvorlauf 52 und der Primärrücklauf 54 des zweiten Wärmetauschers 40 sind also über die Vorlaufübergabestation 43 an den Fernwärmevorlauf 61 und den Fernwärmerücklauf 63 angeschlossen. Die Vorlaufübergabestation 43 weist Absperrventile 27A, Entlüftungsventile, Manometer, einen Differenzdruckregler, einen Wärmemengenzähler 29A sowie eine Strahlpumpe 24 auf, die aus Darstellungsgründen in den Fig. 2 und 3 nur zum Teil gezeigt sind, und die wie in Fig. 1 gezeigt verschaltet sind. Hierbei ist statt des in Fig. 1 gezeigten Regelventils 25A zwischen dem Primärvorlauf 52 des zweiten Wärmetauschers 40 und dem Fernwärmevorlauf 61 eine Strahlpumpe 24 angeordnet, die mit ihrem Treibmittelanschluss an den Fernwärmevorlauf 61 und mit ihrem Sauganschluss an einen Primärrücklauf 54 des zweiten Wärmetauschers 40 angeschlossen ist. Zur besseren und effektiveren Wärmeübertragung sind der erste 30 und der zweite Wärmetauscher 40 vom Typ eines Gegenstromwärmetauschers, wobei die Wärme im Gegenstromprinzip übertragbar ist.

Der Primärrücklauf 53 des ersten Wärmetauschers 30 und der Primärrücklauf 54 des zweiten Wärmetauschers 40 sind miteinander verbunden, und sind gemeinsam an den Fernwärmerücklauf 63 des Fernwärmenetzes 60 angeschlossen. Der Primärrücklauf 54 des zweiten Wärmetauschers 40 ist also mit dem Primärrücklauf 53 des ersten Wärmetauschers 30 verbunden, und über den Anschluss 98B der Fernwärmeverbraucheranlage 10 an den Anschluss 99B des Fernwärmenetzes 60, und somit an den Fernwärmerücklauf 63 angeschlossen. Hierbei ist die Rücklaufübergabestation 33 zwischen dem gemeinsamen Anschlussknoten 101 von Primärrücklauf 53, 54 des ersten 30 und zweiten Wärmetauschers 40 und dem ersten Wärmetauscher 30, und die Vorlaufübergabestation 43 zwischen dem gemeinsamen Anschlussknoten 101 von Primärrücklauf 53, 54 des ersten 30 und zweiten Wärmetauschers 40 und dem zweiten Wärmetauschers 40 angeordnet. Der Primärrücklauf 53 des ersten Wärmetauschers 30 und der Primärrücklauf 54 des zweiten Wärmetauschers 40 sind also nach den jeweiligen Wärmemengenzählern 29A, 29B miteinander verbunden. Zur Wärmeübertragung durch den zweiten Wärmetauscher 40 fließt ein Medium aus dem Fernwärmevorlauf 61 durch die Vorlaufübergabestation 43 über den Primärvorlauf 52 des zweiten Wärmetauschers 40, durchströmt diesen und fließt über den Primärrücklauf 54 des zweiten Wärmetauschers 40 durch die Vorlaufübergabestation 43 in den Fernwärmerücklauf 63.

Die Fernwärmeverbraucheranlage 10 weist ein Wärmeverbrauchersystem 15 auf, das von dem ersten Wärmetauscher 30 mit Wärme versorgbar ist. Aus Darstellungsgründen ist das Wärmeverbrauchersystem 15 in Fig. 2 nicht gezeigt. Das Wärmeverbrauchersystem 15 ist an die Sekundärseite des ersten Wärmetauschers 30 angeschlossen, wobei der Sekundärvorlauf 55 des ersten Wärmetauschers 30 an den Vorlauf 17 des Wärmeverbrauchersystems 15, und der Sekundärrücklauf 57 des ersten Wärmetauschers 30 an den Rücklauf 19 des Wärmeverbrauchersystems 15 angeschlossen ist. An das Wärmeverbrauchersystem 15 sind Wärmeverbraucher 13 angeschlossen, um über das Wärmeverbrauchersystem 15 von dem ersten Wärmetauscher 30 mit Wärme versorgt zu werden. Hierzu sind die Wärmeverbraucher 13 mit dem Vorlauf 17 des Wärmeverbrauchersystems und dem Rücklauf 19 des Wärmeverbrauchersystems 15 verbunden, wobei über den Vorlauf 17 des Wärmeverbrauchersystems dem Wärmeverbraucher 13 warmes Medium des Wärmeverbrauchersystems 15 geliefert wird, das durch den Wärmeverbraucher 13 abgekühlt wird und wieder zurück in den Rücklauf 19 des Wärmeverbrauchersystems geführt wird. Das Wärmeverbrauchersystem 15 ist als Kreislauf ausgeführt, und weist eine Pumpe 23 auf, um das Medium des Wärmeverbrauchersystems 15 durch die Leitungen des Wärmeverbrauchersystems 15 von dem ersten Wärmetauscher 30 zu einem Wärmeverbraucher 13 und wieder zurück zu pumpen.

An das Wärmeverbrauchersystem 15 sind vier als Heizkreise ausgeführte Wärmeverbraucher 13 angeschlossen, um über das Wärmeverbrauchersystem 15 von dem ersten Wärmetauscher 30 mit Wärme versorgt zu werden. Die Wärmeverbraucher 13 sind jeweils als Niedertemperatur-Heizkreise für Fußbodenheizungen, Decken- und Wandheizungen sowie für Heizungen von Schwimmbadwasser ausgeführt, und werden über den ersten Wärmetauscher 30 mit Wärme aus dem Fernwärmerücklauf 63 versorgt.

Weiter weist die Fernwärmeverbraucheranlage 10 einen Trinkwassererwärmer 80 zur Erwärmung von Trinkwarmwasser auf, der von dem ersten Wärmetauscher 30 zur Vorerwärmung des Trinkwarmwassers mit Wärme versorgbar ist. Hierzu weist der Trinkwassererwärmer 80 einen ersten Teiltrinkwassererwärmer 81 auf, der auch als Vorwärmer bezeichnet werden kann, wobei der erste Teiltrinkwassererwärmer 81 von dem ersten Wärmetauscher 30 über das Wärmeverbrauchersystem 15 zur Vorerwärmung des Trinkwarmwassers mit Wärme versorgbar ist. Hierzu ist der erste Teiltrinkwassererwärmer 81 mit dem Vorlauf 17 und dem Rücklauf 19 des Wärmeverbrauchersystems 15 verbunden. Der erste Teiltrinkwassererwärmer 81 ist als Wärmetauscher ausgeführt, und in einem unteren Bereich des Trinkwassererwärmers 80 angeordnet. Durch den ersten Teiltrinkwassererwärmer 81 kann die Temperatur des Trinkwarmwassers von 10°C bis auf 40°C vorerwärmt werden.

Der zweite Wärmetauscher 40 ist auf der Sekundärseite mit einem zweiten Teiltrinkwassererwärmer 83 des Trinkwassererwärmers 80 verbunden, sodass die Fernwärmeverbraucheranlage 10 einen Trinkwassererwärmer 80 zur Erwärmung von Trinkwarmwasser auf 60°C aufweist, der von dem zweiten Wärmetauscher 40 zur Resterwärmung des Trinkwarmwassers mit Wärme versorgbar ist. Hierzu ist der Sekundärvorlauf 55 des zweiten Wärmetauschers 40 über eine Pumpe 23, die als Ladepumpe wirkt, und der Sekundärrücklauf 57 des zweiten Wärmetauschers 40 über ein Rückschlagventil 95 mit dem zweiten Teiltrinkwassererwärmer 83 verbunden. Das in dem zweiten Wärmetauscher erwärmte Medium fließt von dem Sekundärvorlauf 55 des zweiten Wärmetauschers 40 über die Pumpe 23 zu dem zweiten Teiltrinkwassererwärmer 83, durchströmt diesen zur Resterwärmung des Trinkwarmwassers auf 60°C, und fließt anschließend von dem zweiten Teiltrinkwassererwärmer 83 durch ein Rückschlagventil über den Sekundärrücklauf 57 des zweiten Wärmetauschers 40 zurück in den zweiten Wärmetauscher 40, um dort wieder erwärmt zu werden. Der zweite Teiltrinkwassererwärmer 83 ist als Wärmetauscher ausgeführt, und in einem oberen Bereich des Trinkwassererwärmers 80 angeordnet.

Das zu erwärmende Trinkkaltwasser wird dem Trinkwassererwärmer 80 über einen Trinkkaltwassereintritt 90 zugeführt, in diesem erwärmt, und verlässt den Trinkwassererwärmer als Trinkwarmwasser über den Trinkwarmwasseraustritt 93, um zu den Verbrauchern geführt zu werden. Hierbei fließt das Trinkkaltwasser zuerst in den ersten 81 und anschließen in den zweiten Teiltrinkwassererwärmer 83.

Zudem weist die Fernwärmeverbraucheranlage 10 ein als Mischventil ausgeführtes Drei-Wege-Ventil 21 auf, durch das das Wärmeverbrauchersystem 15 von dem zweiten Wärmetauscher 40 der Fernwärmeverbraucheranlage 10 mit Wärme versorgbar ist. Hierzu ist das Drei-Wege-Ventil 21 an den Vorlauf 17 des Wärmeverbrauchersystems, den Sekundärvorlauf 55 des ersten 30 und den Sekundärvorlauf 55 des zweiten Wärmetauschers 40 angeschlossen. Durch das Drei-Wege-Ventil 21 kann das Wärmeverbrauchersystem 15 bei Bedarf mit Wärme von dem zweiten Wärmetauscher 40 versorgt werden. Sollte das Medium in dem Wärmeverbrauchersystem 15 also von dem ersten Wärmetauscher 30 nicht ausreichend erwärmt werden, kann über das Drei-Wege-Ventil 21 Medium, das von dem zweiten Wärmetauscher 40 erwärmt wurde, beigemischt werden. Über das Drei-Wege-Ventil 21 kann das Wärmeverbrauchersystem 15 von dem ersten 30 und/oder dem zweiten Wärmetauscher 40 mit Wärme versorgt werden. Dies kann z.B. bei einer unzureichenden Wärmelieferung durch den ersten Wärmetauscher 30 aufgrund einer zu geringen Temperatur des Fernwärmerücklaufs 63, bei einem defekten ersten Wärmetauscher 30 oder bei Spitzenlasten von Vorteil sein. Um einen geschlossenen Kreislauf des Verteilersystems 15 zu ermöglichen, ist der Rücklauf 19 des Wärmeverbrauchersystems 15 über ein Rückschlagventil 95 an den Sekundärrücklauf 57 des zweiten Wärmetauschers angeschlossen.

Der Primärvorlauf 51 des ersten Wärmetauschers 30 ist, wie in Fig. 4 gezeigt, über eine rohrförmige Leitung 71 an den Fernwärmerücklauf 63 angeschlossen, wobei eine Leitungsöffnung 73 der Leitung 71 so in dem Fernwärmerücklauf 63 angeordnet ist, dass die Leitung 71 mit der Leitungsöffnung 73 entgegen einer Strömungsrichtung 65 des Fernwärmerücklaufs 63 orientiert ist. Dies entspricht der Leitung 71, die der Fernwärmerücklauf 63 an dem Anschluss 99A zur Versorgung der Fernwärmeverbraucheranlage 10 mit Wärme aus dem Fernwärmerücklauf 63 aufweist. Eine Leitungsöffnung 73 der Leitung 71 ist so in dem Fernwärmerücklauf 63 angeordnet, dass die Leitung 71 mit der Leitungsöffnung 73 entgegen einer Strömungsrichtung 65 des Fernwärmerücklaufs 63 orientiert ist. Hierbei weist die von der Leitungsöffnung 73 aufgespannte Fläche eine Flächennormale 75 auf, die der Leitung 71 abgewandt ist, und gegen die Strömungsrichtung 65 gerichtet ist, wobei die Flächennormale 75 und die Strömungsrichtung 65 einen Winkel von ca. 45° einschließen. Die Leitungsöffnung 73 ist also in einem Winkel von ca. 45° zu der Strömungsrichtung 65 geneigt. Eine solche Anordnung wird auch als Einschuhen der Leitung 71 in den Fernwärmerücklauf 63 bezeichnet. Hierdurch wird das in dem Fernwärmerücklauf 63 geführte Medium durch einen Injektor-Effekt dem ersten Wärmetauscher 30 zugeführt.

Weiter ist, wie ebenfalls in Fig. 4 gezeigt, der Primärrücklauf 53 des ersten Wärmetauschers 30 und der Primärrücklauf 54 zweiten Wärmetauschers 40 über eine rohrförmige Leitung an den Fernwärmerücklauf 63 angeschlossen, wobei eine Leitungsöffnung 73 der Leitung 71 so in dem Fernwärmerücklauf 63 angeordnet ist, dass die Leitung 71 mit der Leitungsöffnung 73 in eine Strömungsrichtung 65 des Fernwärmerücklaufs 63 orientiert ist. Diese Leitung entspricht der Leitung 71, die an einem Anschluss 99B des Fernwärmerücklaufs 63 angeordnet ist, über den das von dem ersten 30 und/oder zweiten Wärmetauscher 40 abgekühltes Medium wieder in den Fernwärmerücklauf geleitet werden kann. Der Fernwärmerücklauf 63 weist also einen Anschluss 99B mit einer Leitung 71 für eine Fernwärmeverbraucheranlage 10 auf, um von der Fernwärmeverbraucheranlage 10 abgekühltes Medium in den Fernwärmerücklauf 63 zu leiten, wobei eine Leitungsöffnung 73 der Leitung 71 so in dem Fernwärmerücklauf 63 angeordnet ist, dass die Leitung 71 mit der Leitungsöffnung 73 in eine Strömungsrichtung 65 des Fernwärmerücklaufs 63 orientiert ist. Hierbei weist die von der Leitungsöffnung 73 aufgespannte Fläche eine Flächennormale 75 auf, die der Leitung 71 abgewandt ist und in Strömungsrichtung 65 gerichtet ist, wobei die Flächennormale 75 und die Strömungsrichtung 65 einen Winkel von ca. 45° einschließen. Eine solche Anordnung der Leitung 71 an dem Fernwärmerücklauf 63 wird üblicherweise als Einschuhen bezeichnet. Hierbei wird gemäß dem Gesetz von Bernoulli ein dynamischer Druckabfall durch das an der Leitungsöffnung 73 vorbeiströmende Medium entstehen, der bewirkt, dass das in der Leitung 71 befindliche Medium aus der Leitung 71 in den Fernwärmerücklauf 63 fließt. In Fig. 4 ist die Drosselklappe 20 aus Darstellungsgründen nicht gezeigt.

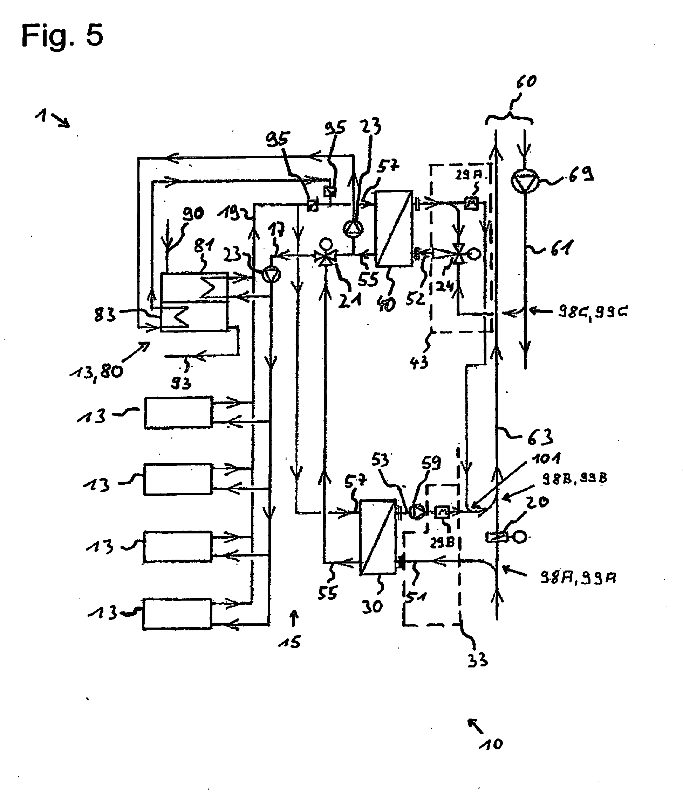

In einem zweiten Ausführungsbeispiel, dargestellt in Fig. 5, das sich ansonsten nicht von dem ersten Ausführungsbeispiel unterscheidet, ist die Förderpumpe 59 zwischen dem Primärrücklauf 53 des ersten Wärmetauschers 30 und dem Fernwärmerücklauf 63 angeordnet. Hierdurch wird die Saugwirkung der Förderpumpe 59 verbessert, was zu einer Verbesserung der Wärmeübertragung des ersten Wärmetauschers 30 führt. Dies ist vor allem bei hohen Drücken und/oder hohen Strömungsgeschwindigkeiten innerhalb des Fernwärmerücklaufs 63 von Vorteil.

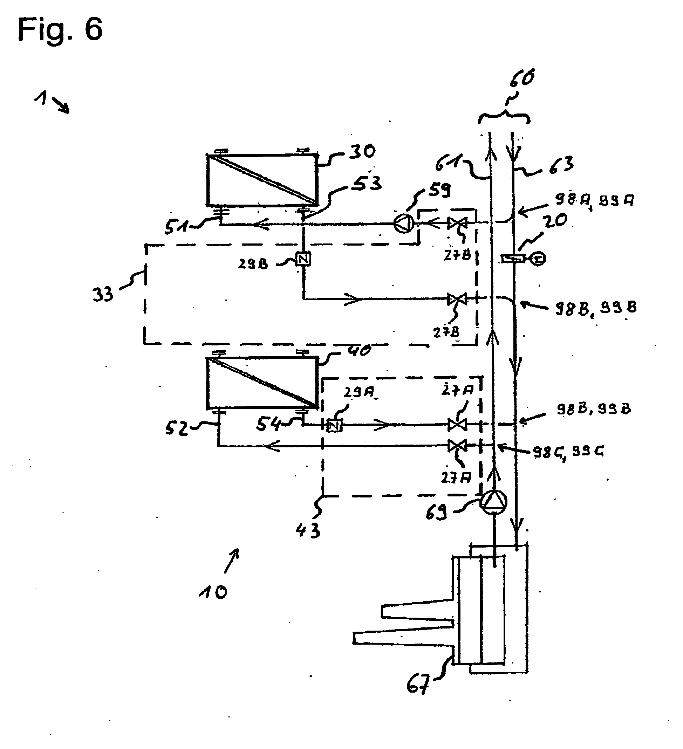

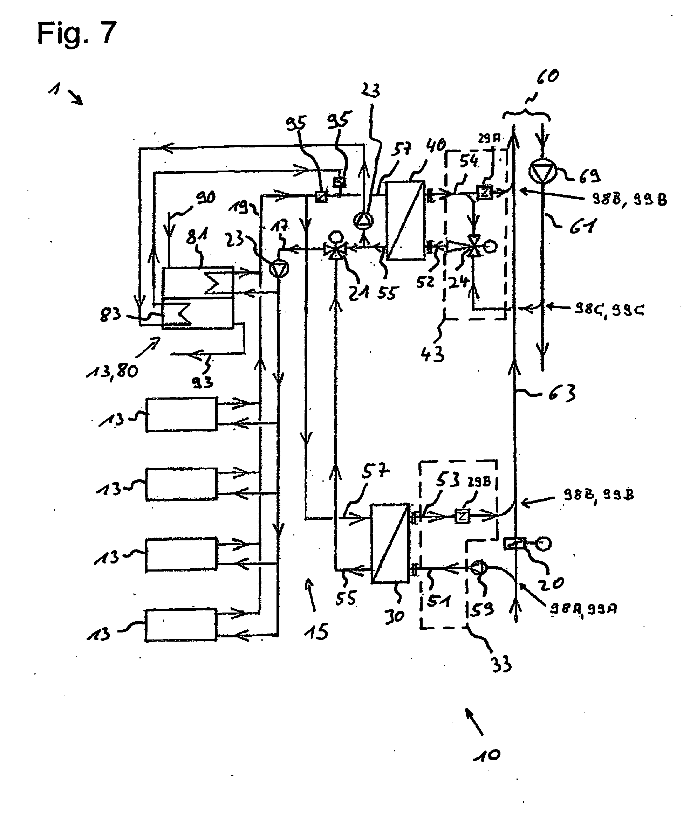

In einem dritten Ausführungsbeispiel, dargestellt in Fig. 6 und 7, das sich ansonsten nicht von dem ersten Ausführungsbeispiel unterscheidet, sind der Primärrücklauf 53 des ersten Wärmetauschers 30 und der Primärrücklauf 54 des zweiten Wärmetauschers 40 getrennt voneinander an den Fernwärmerücklauf 63 des Fernwärmenetzes 60 angeschlossen. Der Primärrücklauf 53 des ersten Wärmetauschers 30 und der Primärrücklauf 54 des zweiten Wärmetauschers 40 sind also getrennt voneinander über einen Anschluss 98B der Fernwärmeverbraucheranlage 10 an einen Anschluss 99B des Fernwärmenetzes 60, und somit an den Fernwärmerücklauf 63 angeschlossen. Der erste 30 und der zweite Wärmetauscher 40 weisen also einen Primärrücklauf 53 auf, die nicht zuerst miteinander verbunden werden, um anschließend an den Fernwärmerücklauf 63 angeschlossen zu werden, sondern über getrennte Leitungen an den Fernwärmerücklauf 63 angeschlossen werden. Bei der in Fig. 6 und 7 dargestellten Fernwärmeverbraucheranlage 10 handelt es sich also um ein Vier-Leiter-System, da die Fernwärmeverbraucheranlage 10 vier Anschlüsse an das Fernwärmenetz 60 aufweist. Diese sind der Primärvorlauf 51 des ersten 30, der Primärvorlauf 52 des zweiten Wärmetauschers 40, sowie der Primärrücklauf 53 des ersten 30 und der Primärrücklauf 54 des zweiten Wärmetauschers 40. Hierbei sind der Primärvorlauf 51 des ersten Wärmetauschers 30, sowie der Primärrücklauf 53 des ersten 30 und der Primärrücklauf 54 des zweiten Wärmetauschers 40 wie in Fig. 4 dargestellt über rohrförmige Leitungen 71 an den Fernwärmerücklauf 63 angeschlossen.

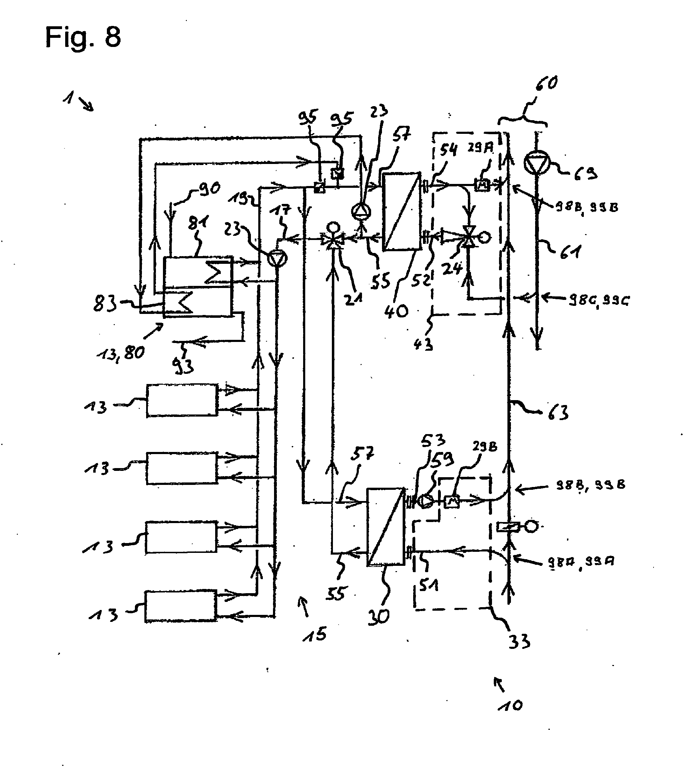

In einem vierten Ausführungsbeispiel, dargestellt in Fig. 8, das sich ansonsten nicht von dem dritten Ausführungsbeispiel unterscheidet, ist die Förderpumpe 59 zwischen dem Primärrücklauf 53 des ersten Wärmetauschers 30 und dem Fernwärmerücklauf 63 angeordnet. Hierdurch wird, wie bereits für das zweite Ausführungsbeispiel erläutert, die Saugwirkung der Förderpumpe 59 verbessert, was zu einer Verbesserung der Wärmeübertragung des ersten Wärmetauschers 30 führt. Dies ist vor allem bei hohen Drücken und/oder hohen Strömungsgeschwindigkeiten innerhalb des Fernwärmerücklaufs 63 von Vorteil.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Fernwärmesystem
- 10: Fernwärmeverbraucheranlage
- 13: Wärmeverbraucher
- 15: Wärmeverbrauchersystem
- 17: Vorlauf des Wärmeverbrauchersystems
- 19: Rücklauf des Wärmeverbrauchersystems
- 20: Drosselklappe
- 21: Drei-Wege-Ventil
- 22A: Differenzdruckregler der Vorlaufübergabestation
- 23: Pumpe
- 24: Strahlpumpe
- 25A: Regelventil der Vorlaufübergabestation
- 26A: Entlüftungsventil der Vorlaufübergabestation
- 27A: Absperrventil der Vorlaufübergabestation
- 27B: Absperrventil der Rücklaufübergabestation
- 28A: Manometer der Vorlaufübergabestation
- 29A: Wärmemengenzähler der Vorlaufübergabestation
- 29B: Wärmemengenzähler der Rücklaufübergabestation
- 30: erster Wärmetauscher
- 33: Rücklaufübergabestation
- 40: zweiter Wärmetauscher
- 43: Vorlaufübergabestation
- 51: Primärvorlauf des ersten Wärmetauschers
- 52: Primärvorlauf des zweiten Wärmetauschers
- 53: Primärrücklauf des ersten Wärmetauschers
- 54: Primärrücklauf des zweiten Wärmetauschers
- 55: Sekundärvorlauf
- 57: Sekundärrücklauf
- 59: Förderpumpe
- 60: Fernwärmenetz
- 61: Fernwärmevorlauf
- 63: Fernwärmerücklauf
- 65: Strömungsrichtung
- 67: Fernheizwerk
- 69: Fernwärmepumpe
- 71: Leitung
- 73: Leitungsöffnung
- 75: Flächennormale
- 80: Trinkwassererwärmer
- 81: erster Teiltrinkwassererwärmer
- 83: zweiter Teiltrinkwassererwärmer
- 90: Trinkkaltwassereintritt
- 93: Trinkwarmwasseraustritt
- 95: Rückschlagventil
- 98A: Anschluss der Fernwärmeverbraucheranlage
- 98B: Anschluss der Fernwärmeverbraucheranlage
- 98C: Anschluss der Fernwärmeverbraucheranlage
- 99A: Anschluss des Fernwärmerücklaufs
- 99B: Anschluss des Fernwärmerücklaufs
- 99C: Anschluss des Fernwärmevorlaufs
- 101: Anschlussknoten

## Patentansprüche

1. Fernwärmeverbraucheranlage (10), die an ein Fernwärmenetz (60) anschließbar ist, und die zumindest einen Wärmeverbraucher (13) aufweist, der mit Wärme aus dem Fernwärmenetz (60) versorgbar ist, die einen Anschluss (98A) aufweist, über den die Fernwärmeverbraucheranlage (10) an einen Fernwärmerücklauf (63) des Fernwärmenetzes (60) anschließbar ist, um dem Fernwärmerücklauf (63) Wärme zur Versorgung des zumindest einen Wärmeverbrauchers (13) zu entnehmen, und die eine Rücklaufübergabestation (33) aufweist, um dem Fernwärmerücklauf (63) über die Rücklaufübergabestation (33) Wärme zu entnehmen, **dadurch gekennzeichnet, dass** die Rücklaufübergabestation (33) einen Wärmemengenzähler (29B) aufweist, um die dem Fernwärmenetz entnommene Wärme zu erfassen.

2. Fernwärmeverbraucheranlage (10) nach Anspruch 1 **dadurch gekennzeichnet, dass** die Fernwärmeverbraucheranlage (10) einen ersten Wärmetauscher (30) mit einem Primärvorlauf (51) und einem Primärrücklauf (53) aufweist, wobei der Primärvorlauf (51) und der Primärrücklauf (53) des ersten Wärmetauschers (30) an den Fernwärmerücklauf (63) anschließbar sind, um dem Fernwärmerücklauf (63) Wärme zu entnehmen.

3. Fernwärmeverbraucheranlage (10) nach einem der vorherigen Ansprüche, **dadurch gekennzeichnet, dass** die Fernwärmeverbraucheranlage (10) einen Anschluss (98C) aufweist, über den die Fernwärmeverbraucheranlage (10) an einen Fernwärmevorlauf (61) des Fernwärmenetzes (60) anschließbar ist, um dem Fernwärmevorlauf (61) Wärme zu entnehmen.

4. Fernwärmeverbraucheranlage (10) nach Anspruch 3, **dadurch gekennzeichnet, dass** die Fernwärmeverbraucheranlage (10) eine Vorlaufübergabestation (43) aufweist, um dem Fernwärmevorlauf (61) über die Vorlaufübergabestation (43) Wärme zu entnehmen.

5. Fernwärmeverbraucheranlage (10) nach einem der Ansprüche 2 bis 4, **dadurch gekennzeichnet, dass** die Fernwärmeverbraucheranlage (10) einen zweiten Wärmetauscher (40) mit einem Primärvorlauf (52) und einem Primärrücklauf (54) aufweist, wobei der Primärvorlauf (52) an einen Fernwärmevorlauf (61) des Fernwärmenetzes (60) und der Primärrücklauf (54) an den Fernwärmerücklauf (63) anschließbar ist, um dem Fernwärmevorlauf (61) Wärme zu entnehmen.

6. Fernwärmeverbraucheranlage (10) nach Anspruch 5, **dadurch gekennzeichnet, dass** der Primärvorlauf (52) und der Primärrücklauf (54) des zweiten Wärmetauschers (40) über die Vorlaufübergabestation (43) an den Fernwärmevorlauf (61) und den Fernwärmerücklauf (63) anschließbar ist.

7. Fernwärmeverbraucheranlage (10) nach Anspruch 5 oder 6, **dadurch gekennzeichnet, dass** der Primärrücklauf (53) des ersten Wärmetauschers (30) und der Primärrücklauf (54) des zweiten Wärmetauschers (40) miteinander verbunden sind, um gemeinsam an den Fernwärmerücklauf (63) des Fernwärmenetzes (60) anschließbar zu sein.

8. Fernwärmeverbraucheranlage (10) nach Anspruch 5 oder 6, **dadurch gekennzeichnet, dass** der Primärrücklauf (53) des ersten (30) und der Primärrücklauf (54) des zweiten Wärmetauschers (40) getrennt voneinander an den Fernwärmerücklauf (63) des Fernwärmenetzes (60) anschließbar sind.

9. Fernwärmeverbraucheranlage (10) nach einem der vorherigen Ansprüche, **dadurch gekennzeichnet, dass** die Fernwärmeverbraucheranlage (10) ein Wärmeverbrauchersystem (15) aufweist, das mit der aus dem Fernwärmerücklauf (63) gewonnenen Wärme versorgbar ist.

10. Fernwärmenetz (60), an das eine Fernwärmeverbraucheranlage (10) anschließbar ist, die zumindest einen Wärmeverbraucher (13) aufweist, der mit Wärme aus dem Fernwärmenetz (60) versorgbar ist, **dadurch gekennzeichnet, dass** das Fernwärmenetz (60) einen Fernwärmerücklauf (63) aufweist, der Fernwärmerücklauf (63) einen Anschluss (99A) für die Fernwärmeverbraucheranlage (10) aufweist, um die Fernwärmeverbraucheranlage (10) mit Wärme aus dem Fernwärmerücklauf (63) zu versorgen, und der Fernwärmerücklauf (63) eine Rücklaufübergabestation (33) aufweist, die einen Wärmemengenzähler (29B) umfasst, um die dem Fernwärmenetz entnommene Wärme zu erfassen.

11. Fernwärmenetz (60) nach Anspruch 10, **dadurch gekennzeichnet, dass** das Fernwärmenetz (60) einen Fernwärmevorlauf (61) aufweist, und der Fernwärmevorlauf (61) einen Anschluss (99C) für eine Fernwärmeverbraucheranlage (10) aufweist, um die Fernwärmeverbraucheranlage (10) mit Wärme aus dem Fernwärmevorlauf (61) zu versorgen.

12. Fernwärmenetz (60) nach Anspruch 10 oder 11, **dadurch gekennzeichnet, dass** der Fernwärmerücklauf (63) an dem Anschluss (99A) zur Versorgung der Fernwärmeverbraucheranlage (10) mit Wärme aus dem Fernwärmerücklauf (63) eine Leitung (71) aufweist, und eine Leitungsöffnung (73) der Leitung (71) so in dem Fernwärmerücklauf (63) angeordnet ist, dass die Leitung (71) mit der Leitungsöffnung (73) entgegen einer Strömungsrichtung (65) des Fernwärmerücklaufs (63) orientiert ist.

13. Fernwärmenetz (60) nach einem der Ansprüche 10 bis 12, **dadurch gekennzeichnet, dass** der Fernwärmerücklauf (63) einen Anschluss (99B) mit einer Leitung (71) für eine Fernwärmeverbraucheranlage (10) aufweist, um von der Fernwärmeverbraucheranlage (10) abgekühltes Medium in den Fernwärmerücklauf (63) zu leiten, und eine Leitungsöffnung (73) der Leitung (71) so in dem Fernwärmerücklauf (63) angeordnet ist, dass die Leitung (71) mit der Leitungsöffnung (73) in eine Strömungsrichtung (65) des Fernwärmerücklaufs (63) orientiert ist.

14. Fernwärmesystem (1), das eine Fernwärmeverbraucheranlage (10) nach einem der Ansprüche 1 bis 9 und ein Fernwärmenetz (60) aufweist, an das eine Fernwärmeverbraucheranlage (10) anschließbar ist, die zumindest einen Wärmeverbraucher (13) aufweist, der mit Wärme aus dem Fernwärmenetz (60) versorgbar ist, wobei das Fernwärmenetz (60) einen Fernwärmerücklauf (63) aufweist, der Fernwärmerücklauf (63) einen Anschluss (99A) für die Fernwärmeverbraucheranlage (10) aufweist, um die Fernwärmeverbraucheranlage (10) mit Wärme aus dem Fernwärmerücklauf (63) zu versorgen, und das Fernwärmenetz (60) nach einem der Ansprüche 11 bis 13 fortgebildet sein kann.

## Claims

1. A district heating consumer installation (10) that is connectable to a district heating grid (60) and comprising at least one heat consumer (13) which can be supplied with heat from the district heating grid (60), comprising a connector (98A) through which the district heating consumer installation (10) is connectable to a district heating return line (63) of the district heating grid (60) to extract heat from the district heating return line (63) for supply of the at least one heat consumer (13), and comprising a return line delivery station(33) for extracting heat from the district heating return line (63) through the return line delivery station (33), **characterised in that** the return line delivery station (33) comprises a heat metre (29B) to determine the heat extracted from the district heating grid.

2. The district heating consumer installation (10) according to claim 1, **characterised in that** the district heating consumer installation (10) comprises a first heat exchanger (30) with a primary feed line (51) and a primary return line (53), wherein the primary feed line (51) and the primary return line (53) of the first heat exchanger (30) are connectable to the district heating return line (63) for extracting heat from the district heating return line (63).

3. The district heating consumer installation (10) according to any one of the preceding claims, **characterised in that** the district heating consumer installation (10) comprises a connector (98C) through which the district heating consumer installation (10) is connectable to a district heating feed line (61) of the district heating grid (60) for extracting heat from the district heating feed line (61).

4. The district heating consumer installation (10) according to claim 3, **characterised in that** the district heating consumer installation (10) comprises a feed line delivery station (43) for extracting heat from the district heating feed line (61) through the feed line delivery station (43).

5. The district heating consumer installation (10) according to any one of claims 2 to 4, **characterised in that** the district heating consumer installation (10) comprises a second heat exchanger (40) with a primary feed line (52) and a primary return line (54), wherein the primary feed line (52) is connectable to a district heating feed line (61) of the district heating gird (60) and the primary return line (54) is connectable to a district heating return line (63) for extracting heat from the district heating feed line (61).

6. The district heating consumer installation (10) according to claim 5, **characterised in that** the primary feed line (52) and the primary return line (54) of the second heat exchanger (40) is connectable to the district heating feed line (61) and the district heating return line (63) through the heat line delivery station (43).

7. The district heating consumer installation (10) according to claim 5 or 6 **characterised in that** the primary return line (53) of the first heat exchanger (30) and the primary return line (54) of the second heat exchanger (40) communicate with each other to be jointly connectable to the district heating return line (63) of the district heating grid (60).

8. The district heating consumer installation (10) according to claim 5 and 6 **characterised in that** the primary return line (53) of the first heat exchanger (30) and the primary return line (54) of the second heat exchanger (40) are separately connectable to the district heating return line (63) of the district heating grid (60).

9. The district heating consumer installation (10) according to any one of the preceding claims, **characterised in that** the district heating consumer installation (10) comprises a heat consumer system (15) that can be supplied with the heat acquired from the district heating return line (63).

10. A district heating grid (60) to which a district heating consumer installation (10) is connectable which comprises at least a heat consumer (13) which can be supplied with heat from the district heating grid (60), **characterised in that** the district heating grid (60) comprises a district heating return line (63), the district heating return line (63) comprises a connector (99A) for the district heating consumer installation (10) to supply the district heating consumer installation (10) with heat from the district heating return line (63), and the district heating return line (63) comprises a return line delivery station (33) that includes a heat metre (29B) for determining the heat extracted from the district heating grid.

11. The district heating grid (60) according to claim 10, **characterised in that** the district heating grid (60) comprises a district heating feed line (61), and the district heating feed line (61) comprises a connector (99C) for the district heating consumer installation (10) to supply the district heating consumer installation (10) with heat from the district heating feed line (61).

12. The district heating grid (60) according to claim 10 or 11, **characterised in that** the district heating return line (63) comprises a pipe (71) at the connector (99A) for the supply of the district heating consumer installation (10) with heat from the district heating return line (63), and a pipe opening (73) of the pipe (71) is arranged in the district heating return line (63) such that the pipe (71) is oriented with the pipe opening (73) contrary to a flow direction (65) of the district heating return line (63).

13. The district heating grid (60) according to any one of claims 10 to 12, **characterised in that** the district heating return line (63) comprises a connector (99B) with a pipe (71) for a district heating consumer installation (10) to inject a medium cooled down by the district heating consumer installation (10) into the district heating return line (63), and a pipe opening (73) of the pipe (71) is arranged in the district heating return line (63) such that the pipe (71) is oriented with the pipe opening (73) in a flow direction (65) of the district heating return line (63).

14. A district heating system (1), which comprises a district heating consumer installation (10) according to any one of claims 1 to 9 and a district heating grid (60) to which a district heating consumer installation (10) is connectable that comprises at least one heat exchanger (13) that can be supplied with heat from the district heating grid (60), wherein the district heating grid (60) comprises a district heating return line (63), the district heating return line (63) comprises a connector (99A) for the district heating consumer installation (10) to supply the district heating consumer installation (10) with heat from the district heating return line (63), and the district heating grid (60) can be accomplished according to any one of claims 11 to 13.

## Revendications

1. Installation consommatrice de chauffage urbain (10) qu'il est possible de brancher à un réseau de chauffage urbain (60) et qui comprend au moins un consommateur de chaleur (13) qu'il est possible d'alimenter avec de la chaleur depuis le réseau de chauffage urbain (60), ladite installation comprenant un raccordement (98A) via lequel l'installation consommatrice de chauffage urbain (10) peut être branchée à un retour de chauffage urbain (63) du réseau de chauffage urbain (60) afin d'extraire de la chaleur depuis le retour (63) de chauffage urbain pour l'alimentation dudit au moins un consommateur de chaleur (13), et comprenant une station de transfert de retour (33) pour extraire de la chaleur depuis le retour (63) de chauffage urbain au moyen de la station de transfert de retour (33), **caractérisée en ce que** la station de transfert de retour (33) comprend un compteur de quantité de calories (29B) afin de détecter la chaleur extraite du réseau de chauffage urbain.

2. Installation consommatrice de chauffage urbain (10) selon la revendication 1, **caractérisée en ce que** l'installation consommatrice de chauffage urbain (10) comprend un premier échangeur de chaleur (30) avec une arrivée primaire (51) et un retour primaire (53), dans laquelle l'arrivée primaire (51) et le retour primaire (53) du premier échangeur de chaleur (30) peuvent être branchés au retour (63) de chauffage urbain afin d'extraire de la chaleur depuis le retour (63) de chauffage urbain.

3. Installation consommatrice de chauffage urbain (10) selon l'une des revendications précédentes, **caractérisée en ce que** l'installation consommatrice de chauffage urbain (10) comprend un raccordement (98C) via lequel l'installation consommatrice de chauffage urbain (10) peut être branchée à une arrivée de chauffage urbain (61) du réseau de chauffage urbain (60) pour extraire de la chaleur depuis l'arrivée (61) de chauffage urbain.

4. Installation consommatrice de chauffage urbain (10) selon la revendication 3, **caractérisée en ce que** l'installation consommatrice de chauffage urbain (10) comprend une station de transfert d'arrivée (43), afin d'extraire de la chaleur depuis l'arrivée (61) de chauffage urbain au moyen de la station de transfert d'arrivée (43).

5. Installation consommatrice de chauffage urbain (10) selon l'une des revendications 2 à 4, **caractérisée en ce que** l'installation consommatrice de chauffage urbain (10) comprend un second échangeur de chaleur (40) avec une arrivée primaire (52) et un retour primaire (54), dans laquelle l'arrivée primaire (52) est susceptible d'être branchée à une arrivée de chauffage urbain (61) du réseau de chauffage urbain (60) et le retour primaire (54) est susceptible d'être branché au retour de chauffage urbain (63) afin d'extraire de la chaleur depuis l'arrivée de chauffage urbain (61).

6. Installation consommatrice de chauffage urbain (10) selon la revendication 5, **caractérisée en ce que** l'arrivée primaire (52) et le retour primaire (54) du second échangeur de chaleur (40) sont susceptibles d'être branchés via la station de transfert d'arrivée (43) à l'arrivée de chauffage urbain (61) et au retour de chauffage urbain (63).

7. Installation consommatrice de chauffage urbain (10) selon la revendication 5 ou 6, **caractérisée en ce que** le retour primaire (53) du premier échangeur de chaleur (30) et le retour primaire (54) du second échangeur de chaleur (40) sont reliés l'un à l'autre, afin de pouvoir être branchés conjointement au retour de chauffage urbain (63) du réseau de chauffage urbain (60).

8. Installation consommatrice de chauffage urbain (10) selon la revendication 5 ou 6, **caractérisée en ce que** le retour primaire (53) du premier échangeur de chaleur (30) et le retour primaire (54) du second échangeur de chaleur (40) sont susceptibles d'être branchés séparément l'un de l'autre au retour de chauffage urbain (63) du réseau de chauffage urbain (60).

9. Installation consommatrice de chauffage urbain (10) selon l'une des revendications précédentes, **caractérisée en ce que** l'installation consommatrice de chauffage urbain (10) comprend un système consommateur de chaleur (15), qu'il est possible d'alimenter avec la chaleur récupérée depuis le retour de chauffage urbain (63).

10. Réseau de chauffage urbain (60) auquel peut être branché une installation consommatrice de chauffage urbain (10) qui comprend au moins un consommateur de chaleur (13) qu'il est possible d'alimenter avec de la chaleur depuis le réseau de chauffage urbain (60), **caractérisé en ce que** le réseau de chauffage urbain (60) comprend un retour de chauffage urbain (63), le retour de chauffage urbain (63) comprend un raccordement (99A) pour l'installation consommatrice de chauffage urbain (10) afin d'alimenter l'installation consommatrice de chauffage urbain (10) avec de la chaleur depuis le retour de chauffage urbain (63), et le retour de chauffage urbain (63) comprend une station de transfert de retour (33) qui inclut un compteur de quantité de calories (29B), afin de détecter la chaleur extraite depuis le réseau de chauffage urbain.

11. Réseau de chauffage urbain (60) selon la revendication 10, **caractérisé en ce que** le réseau de chauffage urbain (60) comprend une arrivée de chauffage urbain (61), et l'arrivée de chauffage urbain (61) comprend un raccordement (99C) pour une installation consommatrice de chauffage urbain (10), afin d'alimenter l'installation consommatrice de chauffage urbain (10) avec de la chaleur depuis l'arrivée de chauffage urbain (61).

12. Réseau de chauffage urbain (60) selon la revendication 10 ou 11, **caractérisé en ce que** le retour de chauffage urbain (63) comprend un conduit (71) au raccordement (99A) pour l'alimentation de l'installation consommatrice de chauffage urbain (10) avec de la chaleur depuis le retour de chauffage urbain (63), et une ouverture (73) du conduit (71) est agencée dans le retour de chauffage urbain (63) de telle façon que le conduit (71) est orienté avec l'ouverture (73) en sens contraire à une direction d'écoulement (65) du retour de chauffage urbain (63).

13. Réseau de chauffage urbain (60) selon l'une des revendications 10 à 12, **caractérisé en ce que** le retour de chauffage urbain (63) comprend un raccordement (99B) avec un conduit (71) pour une installation consommatrice de chauffage urbain (10), afin d'amener dans le retour de chauffage urbain (63) un fluide refroidi par l'installation consommatrice de chauffage urbain (10), et une ouverture (73) du conduit (71) est agencée dans le retour de chauffage urbain (63) de telle façon que le conduit (71) est orienté avec l'ouverture (73) dans une direction d'écoulement (65) du retour de chauffage urbain (63).

14. Système de chauffage urbain (1), qui comprend une installation consommatrice de chauffage urbain (10) selon l'une des revendications 1 à 9 et un réseau de chauffage urbain (60), auquel une installation consommatrice de chauffage urbain (10) peut être branchée, laquelle comprend au moins un consommateur de chaleur (13) qu'il est possible d'alimenter avec de la chaleur depuis le réseau de chauffage urbain (60), dans lequel le réseau de chauffage urbain (60) comprend un retour de chauffage urbain (63), le retour de chauffage urbain (63) comprend un raccordement (99A) pour l'installation consommatrice de chauffage urbain (10), afin d'alimenter l'installation consommatrice de chauffage urbain (10) avec de la chaleur depuis le retour de chauffage urbain (63), et le réseau de chauffage urbain (60) peut être réalisé selon l'une des revendications 11 à 13.
